Europäisches Patentamt

European Patent Office

Office européen des brevets

(19)

(11) **EP 0 780 245 B1**

(12) **EUROPEAN PATENT SPECIFICATION**

(45) Date of publication and mention
of the grant of the patent:
**05.12.2001 Bulletin 2001/49**

(51) Int Cl.[7]: **B60C 11/00**, B60C 11/03,
B60C 11/18, B60C 11/14

(21) Application number: **96120595.2**

(22) Date of filing: **20.12.1996**

(54) **Pneumatic tire**

Luftreifen

Bandage pneumatique

(84) Designated Contracting States:
**DE FR GB IT SE**

(30) Priority: **22.12.1995 JP 33505195**
**19.11.1996 JP 30834796**
**20.11.1996 JP 30977696**
**20.11.1996 JP 30977796**
**10.12.1996 JP 32995796**
**10.12.1996 JP 32997696**

(43) Date of publication of application:
**25.06.1997 Bulletin 1997/26**

(73) Proprietor: **Bridgestone Corporation**
**Tokyo 104-8340 (JP)**

(72) Inventors:
• **Tanabe, Chishiro, c/o Bridgestone Corporation**
**Chuo-ku, Tokyo (JP)**

• **Yamaguchi, Yuji, c/o Bridgestone Corporation**
**Chuo-ku, Tokyo (JP)**
• **Nishikawa, Tomohisa,**
**c/o Bridgestone Corporation**
**Chuo-ku, Tokyo (JP)**

(74) Representative: **Görg, Klaus, Dipl.-Ing. et al**
**Hoffmann Eitle,**
**Patent- und Rechtsanwälte,**
**Arabellastrasse 4**
**81925 München (DE)**

(56) References cited:
**EP-A- 0 130 302      EP-A- 0 239 719**
**EP-A- 0 337 787      EP-A- 0 576 130**
**DE-A- 2 023 723      DE-A- 4 128 613**
**US-A- 2 476 786**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention:

The present invention relates to a pneumatic tire, and more particularly, to a pneumatic tire in which an ice gripping ability is improved.

Description of the Related Art:

In recent years, a studless tire has been used as a tire in which snow/ice gripping abilities are improved.

In order to improve the snow gripping ability, a block pattern having a plurality of blocks are formed on a tread of this type of the studless tire.

On the other hand, in order to improve the ice gripping ability, a rubber material which is more flexible than an ordinary tire is used for the tread of this type of the studless tire so as to obtain frictional force with iced road surfaces.

In order to improve the ice gripping ability, it is considered that the rubber material of the tread is further softened. However, since the problems such as reduction of rigidity in the block and reduction of wear resistance occur, there is a limitation in softening of the rubber material. Moreover, it is considered that a siping is used many times. However, since irregular wears and reduction of rigidity in the block occur, there is a limitation in using the siping many times.

EP-A-0239719 discloses a pneumatic tire in which a reinforcing layer and a tread are disposed at an outer circumference of a crown portion of a carcass which extends over a pair of bead cores and is formed in a toroidal shape. Rubber layers having different wear resistances are adjacent to each other in a cross section of at least a ground portion of the tread. The cross section of the tread is orthogonal to a radial direction of the tire. Two or more rubber layers are superposed on one other per 10 mm length along the cross section.

SUMMARY OF THE INVENTION

With the aforementioned in view, an object of the present invention is to provide a pneumatic tire which can improve ice gripping ability without reducing other abilities.

This object is achieved by a pneumatic tire according to one of claims 1, 13 or 18.

When the rubber layer having high wear resistance and the rubber layer having low wear resistance are compared, the rubber layer having low wear resistance wears faster than the rubber layer having high wear resistance. Accordingly, when the tread surface wears due to the running of a vehicle, the portion of the rubber layer having low wear resistance becomes lower than the portion of the rubber layer having high wear resistance. Thus, a plurality of narrow and relatively shallow grooves appear on the tread surface. Due to the grooves appeared in this way, drainability and an edge effect are obtained, and wet resistance and ice gripping ability are improved.

Further, because the state can be maintained not only at the initial stages of wear but also when the wear progresses, wet resistance and ice gripping ability can be continuously improved.

It suffices that the grounding portion of the tread has a structure in which rubber layers having different wear resistance are superposed on one other. The entire tread does not necessarily have a structure in which rubber layers having different wear resistance are superposed on one other. For example, in a case in which the tread is a cap/base structure, it suffices that only the cap portion is structured as such.

In a case in which a rubber layer having high wear resistance and a rubber layer having low wear resistance are alternately superposed on one other, it is preferable that the thickness of the rubber layer having low wear resistance is thinner than that of the rubber layer having high wear resistance. If the rubber layer having high wear resistance is too thick, it is difficult that water reaches the grooves. Thus, drainability and ice gripping ability do not improve. On the contrary, if the rubber layer having low wear resistance is too thick, the rubber layer having high wear resistance is decreased. Due to the reduction of actual ground surface areas, ice gripping ability and wear resistance are reduced.

Therefore, the ratio of thickness of the rubber layer having low wear resistance to the thickness of the rubber layer, which has high wear resistance and appears on the ground surface of the tread, is preferably 5 to 40, wherein the rubber layer having high wear resistance is 100.

Moreover, when the thickness of the rubber layer having low wear resistance is less than 0.05 mm, even if the tread surface wears, it is difficult that the grooves are formed on the tread surface. When the thickness of the rubber layer having high wear resistance is 5.0 mm or more, because the rubber layer having high wear resistance is thick, the distance from the tread surface to the groove is longer, and it is difficult that the water reaches the groove. Ice gripping ability does not improve.

As a method of differentiating the wear resistance of the adjacent rubber layers, a method of changing the hardness of respective rubber layers can be mentioned. Additionally, the type of rubber layers may be changed. (As an example, a rubber layer formed by an ordinary rubber having a foaming ratio of 0 % and a rubber layer formed by a foamed rubber having a foaming ratio of 20 % are alternately superposed on one other.)

For example, in accordance with JIS (Japanese Industrial Standard) K 6264, the degree of the wear resistance of the rubber can be measured by effecting a Lanborn Test under the standard test conditions (a speed of 80 m/min, a slip ratio of 30 %, a load of 40 N, and an amount of falling sand of 20 g/min).

Further, in case of differentiating the hardness of the adjacent rubber layers, it is preferable that the adjacent rubber layers have a difference in hardness of three degrees or more (the amount measured at room temperature with reference to JIS K 6301), and it is more preferable that the rubber layers have a difference in hardness of five degrees or more.

Moreover, any pattern such as a block pattern, a rib pattern, a lug pattern or the like may be used for the tread. Additionally, a pattern-less (groove-less) tread may be used.

The ground portions are preferably blocks defined by a plurality of grooves.

By the blocks defined by the plurality of grooves, a block pattern is formed on the tread. When each block surface wears due to the running of a vehicle, the portion of the rubber layer having low wear resistance becomes lower than the portion of the rubber layer having high wear resistance. Accordingly, a plurality of narrow and relatively shallow grooves appear on each block surface. Due to the grooves appeared in this way, drainability and an edge effect are obtained, and wet resistance and ice gripping ability are improved.

Further, because the state can be maintained not only at the initial stages of wear but also when the wear progresses, the wet resistance and ice gripping ability can be continuously improved.

Moreover, the pneumatic tire can obtain a high snow running ability by the block.

Further said rubber layers are preferably superposed along a transverse direction of the tire.

If the direction of the groove appeared due to the wear is a circumferential direction of the tire, drainability improves, and especially, braking ability on ice can be improved. Additionally, coefficient of friction in the transverse direction of the tire can be increased, and cornering ability can be improved.

Alternatively, said rubber layers preferably superposed along a circumferential direction of the tire.

If the direction of the groove appeared due to the wear is a transverse direction of the tire, braking ability and traction ability on ice are improved due to the draining operation of the edge components which extend in the transverse direction of the tire.

Alternatively, said rubber layers are preferably superposed in the form of annual rings.

When the tread surface wears due to the running of the vehicle, a plurality of annular grooves which are narrow and relatively shallow appear on the tread surface.

Accordingly, due to the drainability of the portions of the grooves which run along the circumferential direction of the tire and the edge components of the portions of the grooves which extend in the transverse direction of the tire, braking ability and traction ability on ice can be improved. In a case in which blocks are formed on the tread, it is preferable that at least one annual ring is formed on one block. Moreover, in a case in which ribs are formed on the tread, it is preferable that a plurality of circumferential grooves are formed along the longitudinal direction of the rib.

A pneumatic tire according to a first aspect comprises at least one layer of said two or more superposed rubber layers having innumerable minute cavities.

Next, the operation of the pneumatic tire relating to the first aspect will be explained.

In the first aspect, in a case in which the rubber layer having high wear resistance has innumerable minute cavities, water which has not be drained into the grooves can be absorbed by the innumerable minute cavities appeared on the surface of the rubber layer. Accordingly, ice braking ability, ice traction ability and wet resistance can be further improved.

On the other hand, in a case in which the rubber layer having low wear resistance has innumerable minute cavities, the rubber layer having low wear resistance is worn more easily, and the depth of the groove can be further increased.

The rubber layer having the highest wear resistance of said rubber layers preferably innumerable minute cavities with a cavity ratio in the range of 2 to 20 %.

The rubber layer which is a convex portion and has the highest wear resistance, has innumerable minute cavities and its cavity ratio is 2 to 20 %. Consequently, water membrane which has not be drained into the grooves on the tread can be absorbed by the innumerable minute cavities appeared on the surface of the rubber layer having the highest wear resistance. Thus, high ice braking ability, ice traction ability and wet resistance can be obtained.

The cavity ratio Vs is represented by;

$$Vs = (\rho_0 / \rho_1 - 1) \times 100 \ (\%)$$

wherein,

$\rho_1$ is a density (g / cm$^3$) of the rubber having minute cavities;
$\rho_0$ is a density (g / cm$^3$) of the solid-phase portion of the rubber having minute cavities.

When the foaming ratio Vs of the foamed rubber is increased, the wear resistance thereof is decreased.

In order to absorb the water membrane efficiently, the average diameter of the minute cavity is preferably 5 to 150 μm, and more preferably 10 to 100 μm.

When the cavity ratio of the rubber layer having the highest wear resistance is less than 2 %, an effect of absorbing the water which has not be drained into the grooves cannot be obtained. On the other hand, when the cavity ratio of the rubber layer having the highest wear resistance is more than 20 %, wear resistance is reduced so that its wear resistance is closer to that of the rubber layer having low wear resistance. As a result, the depth of the groove appeared on the tread cannot be increased and the drainability is lowered.

Alternatively, the rubber layer having the lowest wear resistance of said rubber layers has preferably innumerable minute cavities with a cavity ratio in the range from 21 to 70 %.

By providing innumerable minute cavities on the rubber, i.e., by having a foamed rubber, the wear resistance of the rubber can be decreased. The rubber layer having the lowest wear resistance has innumerable minute cavities, and its cavity ratio is 21 to 70 %. As a result, the wear resistance of the rubber layer having the lowest wear resistance can be further lowered, and the wear of the rubber layer having the lowest wear resistance is promoted such that the grooves can be reliably formed on the tread.

When the cavity ratio of the rubber layer having the lowest wear resistance is less than 21 %, the effect of reducing the wear resistance of the rubber by the innumerable minute cavities is lessened. The wear resistance of the rubber layer having the lowest wear resistance cannot be fully lowered such that it is difficult to form the grooves which are obtained in accordance with the difference in wear.

On the other hand, when the cavity ratio of the rubber layer having the lowest wear resistance is more than 70 %, the wear resistance of the entire tread is reduced.

Further, the rubber layer having the highest wear resistance of said rubber layers and the rubber layer having the lowest wear resistance of said rubber layers have preferably innumerable minute cavities.

Since the rubber layer having the highest wear resistance and the rubber layer having the lowest wear resistance have innumerable minute cavities, the wear of the rubber layer having the lowest wear resistance is promoted such that the grooves can be reliably formed on the tread. Further, water membrane which has not be drained into the grooves can be absorbed by the innumerable minute cavities appeared on the surface of the rubber layer having the highest wear resistance. Consequently, higher ice braking ability, ice traction ability and wet resistance can be obtained.

A difference in the cavity ratios between the rubber layer having the highest wear resistance of the rubber layers and the rubber layer having the lowest wear resistance of the rubber layers is preferably 20 % or more.

Because of the difference between the cavity ratio of the rubber layer having the highest wear resistance and the cavity ratio of the rubber layer having the lowest wear resistance being 20 % or more, the rubber layer having the lowest wear resistance is worn such that the grooves can be reliably formed on the tread.

Here, in a case in which the difference between cavity ratio of the rubber layer having the highest wear resistance and the cavity ratio of the rubber layer having the lowest wear resistance is less than 20 %, it is difficult to form grooves on the tread.

At least some of the minute cavities, which are included in the rubber layer having the highest wear resistance, have preferably a protective layer between the minute cavity and the rubber.

Since some of the minute cavities have the protective layer between the minute cavity and the rubber, collapse of the minute cavities due to the external force is prevented by the protective layer. Moreover, the wear resistance of the rubber layer is improved by the protective layer.

When the tread of the pneumatic tire is worn due to the running of the vehicle, concave portions formed by the minute cavities are formed on the ground surface, and water can be absorbed by the concave portions. Since the collapse of the concave portions, which have been formed by the minute cavities having the protective layer, due to the ground pressure is prevented, even when the high load is imparted, the water content within the ground surface can be reliably absorbed. Further, since the protective layer is harder than the rubber, the edge of the protective layer which catches on the road surface is greater than the edge of the rubber, and thereby improving the ice gripping ability.

Here, as a concrete example of a resin of the protective layer, PE (polyethylene), PP(polypropylene), SPB (syndiotactic-1,2-polybutadien) resin (crystalline syndiotactic-1,2-polybutadiene-type resin) or the like can be mentioned. However, other materials may be used provided that the material is harder than the rubber.

Additionally, at least the rubber layer having the highest wear resistance has preferably innumerable short fibers.

The rubber layer having the highest wear resistance, i.e., the layer which becomes a convex portion of the irregularities of the worn tread has short fibers. When the tread wears due to the running of the vehicle, innumerable short fibers appear on the tread and catch on the iced surface. Accordingly, ice braking ability and ice traction ability can be improved.

Further, when these innumerable short fibers fall from the rubber due to the friction with the road surface or the like, minute concave portions are formed at the locations of the tread where the short fibers have fallen. Because the innumerable concave portions formed on the tread absorb the water content between the tread and the road surface, ice braking ability, ice traction ability and wet resistance can be improved.

Namely, the present invention achieves an effect in which the short fibers projecting to the tread catch on the road surface, and an effect in which water is absorbed by the concave portions where the short fibers have fallen.

As a concrete example of the short fibers, polyester, polypropylene, polyethylene represented by polyethylene terephthalate and polyethylene naphthalate, or the like can be raised. However, other fibers may be used.

Moreover, the diameter of short fiber is preferably 10 µm to 1.0 mm, and the length thereof is preferably 2 to 50 mm. The ratio of the length of the short fiber to the diameter thereof is preferably (the length of the short fiber / the diameter of the short fiber) > 10.

When the percentage content of the short fibers is increased, ice braking ability, ice traction ability and wet resistance improve. However, wear resistance lowers.

As a result, the percentage content of the short fibers is preferably 1 to 15 % by weight. When the percentage content of the short fibers is less than 1 % by weight, ice braking ability, ice traction ability and wet resistance do not improve. When the percentage content of the short fibers exceeds 15 % by weight, wear resistance lowers.

Further, at least the rubber layer having the highest wear resistance has preferably innumerable particles.

The rubber layer having the highest wear resistance, i.e., the layer which becomes a convex portion of the irregularities of the worn tread has innumerable particles. When the tread wears due to the running of the vehicle, innumerable particles appear on the tread and catch on the iced surface. Accordingly, ice braking ability and ice traction ability can be improved.

Further, when these innumerable particles fall from the rubber due to the friction with the road surface or the like, minute concave portions are formed at the locations of the tread where the particles have fallen. Because the innumerable concave portions formed on the tread absorb the water content between the tread and the road surface, ice braking ability, ice traction ability and wet resistance can be improved.

Namely, the present invention achieves an effect in which the particles projecting to the tread catch on the road surface, and an effect in which water is absorbed by the concave portions where the particles have fallen.

As a concrete example of the particle, the material whose surface includes aluminum combined hydroxyl group and silicon combined hydroxyl group (Hydilight™ manufactured by Showa Denko K.K. is one example.), syndiotactic-1,2-polybutadiene resin (crystalline syndiotactic-1,2-polybutadiene-type resin) or the like are preferable. However, other materials may be used. Moreover, the diameter of the particle is preferably 5 µm to 250 µm. The configuration of the particle is not particularly important.

When the percentage content of the particles is increased, ice braking ability, ice traction ability and wet resistance improve. However, wear resistance lowers. As a result, the percentage content of the particles is preferably 1 to 15 % by weight. When the percentage content of the particles is less than 1 % by weight, ice braking ability, ice traction ability and wet resistance do not improve. When the percentage content of the particles exceeds 15 % by weight, wear resistance lowers.

Further, the concrete configuration of an annual ring can be rectangular, circular or the like. However, in the present invention, other configurations may be used.

The second aspect is a pneumatic tire, wherein at least one layer of said two or more superposed rubber layers has innumerable short fibers.

Next, the operation of the pneumatic tire relating to the second aspect will be explained.

The operation of the pneumatic tire relating to the second aspect is similar to that described above. In the second aspect, the rubber layer having the highest wear resistance, i.e., the layer which becomes a convex portion of the irregularities of the worn tread has short fibers. In this case, when the tread wears due to the running of the vehicle, innumerable short fibers appear on the tread and catch on the iced surface. Accordingly, ice braking ability and ice traction ability can be improved.

Further, when these innumerable short fibers fall from the rubber due to the friction or the like with the road surface, minute concave portions are formed at the locations of the tread where the short fibers have fallen. Because the innumerable concave portions formed on the tread absorb the water content between the tread and the road surface, ice braking ability, ice traction ability and wet resistance can be improved.

Namely, in the case in which the rubber layer having the highest wear resistance has short fibers, an effect in which the short fibers projecting to the tread catch on the road surface, and an effect in which water is absorbed by the concave portions where the short fibers have fallen are achieved.

As a concrete example of the short fibers, polyester, polypropylene, polyethylene represented by polyethylene terephthalate and polyethylene naphthalate, or the like can be raised. However, other fibers may be used.

Moreover, the diameter of the short fiber is preferably 10 μm to 1.0 mm, and the length thereof is preferably 2 to 50 mm. The ratio of the length of the short fiber to the diameter thereof is preferably (the length of the short fiber / the diameter of the short fiber) > 10.

When the percentage content of the short fibers is increased, ice braking ability, ice traction ability and wet resistance improve. However, wear resistance lowers.

On the other hand, in a case in which the rubber layer having low wear resistance has innumerable short fibers, the rubber layer having low wear resistance can be worn more easily, and the depth of the groove can be further increased.

As a result, ability of absorbing water content can be raised. Ice braking ability, ice traction ability and wet resistance can be improved.

The rubber layer having the highest wear resistance of said rubber layers has preferably innumerable short fibers, and the percentage content is 1 to 15 % by weight.

The rubber layer, which becomes the convex portion and has the highest wear resistance, has innumerable short fibers. Because the percentage content of the short fibers is 1 to 15 % by weight, it is fully ensured that the short fibers appeared on the tread catch on the road surface and that the water content is absorbed by the minute concave portions where the short fibers have fallen from the rubber.

When the percentage content of the short fibers is less than 1 % by weight, the number of short fibers appeared on the tread is decreased so that the catching-on operation cannot be obtained. Moreover, the number of minute concave portions which are formed after the short fibers fall from the rubber is decreased, and the water which has not been absorbed and drained by the grooves obtained in accordance with the difference in wear is not absorbed. As a result, ice braking ability, ice traction ability and wet resistance do not improve.

On the other hand, when the percentage content of the short fibers exceeds 15 % by weight, wear resistance of the rubber layer having high wear resistance lowers, and the difference between the wear resistance of the rubber layer having high wear resistance and that of the rubber layer having low wear resistance becomes small. Therefore, it is difficult to form grooves which can be obtained in accordance with the difference in wear.

The rubber layer having the lowest wear resistance of said rubber layers has preferably innumerable short fibers, and the percentage content is 16 to 30 % by weight.

The wear resistance of the rubber can be reduced by containing short fibers in the rubber. The rubber layer having the lowest wear resistance has innumerable short fibers, and the percentage content of the short fibers is 16 to 30 % by weight. As a result, the wear resistance of the rubber layer having the lowest wear resistance can be further reduced, the wear of the rubber layer having the lowest wear resistance is promoted such that the grooves can be reliably formed on the tread.

When the percentage content of the short fibers is less than 16 % by weight, the effect in which the wear resistance of the rubber is further lowered by containing the short fibers is lessened. The wear resistance of the rubber layer having the lowest wear resistance cannot be fully lowered, so that it is difficult to form the grooves which can be obtained in accordance with difference in wear.

On the other hand, when the percentage content of the short fibers exceeds 30 % by weight, the wear resistance the entire tread lowers.

Preferably, the rubber layer having the highest wear resistance of said rubber layers and the rubber layer having the lowest wear resistance of said rubber layers have innumerable short fibers, and the difference in the percentage content between the rubber layer having the highest wear resistance and the rubber layer having the lowest wear resistance is 10 % or more by weight.

Because the difference between the percentage content of the short fibers of the rubber layer having the highest wear resistance and the percentage content of the short fibers of the rubber layer having the lowest wear resistance is 10 % or more, the rubber layer having the lowest wear resistance is reliably worn such that the grooves can be reliably formed on the tread.

In a case in which the difference in the percentage content of the short fibers is less than 10 %, the wear resistance of the rubber layer having high wear resistance is closer to that of the rubber layer having low wear resistance. Thus, it is difficult to form grooves which can be obtained in accordance with the difference in wear.

Preferably, at least the rubber layer having the highest wear resistance has innumerable particles.

The rubber layer having the highest wear resistance, i.e., the layer which becomes a convex portion of the irregularities of the worn tread has innumerable particles. When the tread wears due to the running of the vehicle, innumerable particles appear on the tread and catch on the iced surface. Accordingly, ice braking ability and ice traction ability can be improved.

Further, when these innumerable particles fall from the rubber due to the friction with the road surface or the like, minute concave portions are formed at the locations of the tread where the particles have fallen. Because the innumerable concave portions formed on the tread absorb the water content between the tread and the road surface, ice braking ability, ice traction ability and wet resistance can be improved.

Namely, an effect in which the particles projected to the tread catch on the road surface and an effect in which water is absorbed by the concave portions where the particles have fallen are achieved.

As a concrete example of the particle, the material whose surface includes aluminum combined hydroxyl group and silicon combined hydroxyl group (Hydilight™ manufactured by Showa Denko K.K. is one example.), syndiotactic-1,2-polybutadiene resin (crystalline syndiotactic-1,2-polybutadiene-type resin) or the like are preferable. However, other materials may be used. Moreover, the diameter of the particle is preferably 5 μm to 250 μm. The configuration of the particle is not particularly important.

When the percentage content of the particles is increased, ice braking ability, ice traction ability and wet resistance improve. However, wear resistance lowers. As a result, the percentage content of the particles is preferably 1 to 15 % by weight. When the percentage content of the particles is less than 1 % by weight, ice braking ability, ice traction ability and wet resistance do not improve. When the percentage content of the particles exceeds 15 % by weight, wear resistance lowers.

The third aspect is a pneumatic tire, wherein at least one layer of said two or more superposed rubber layers has innumerable particles.

Next, the operation of the pneumatic tire relating to the third aspect will be explained.

The operation of the pneumatic tire relating to the third aspect is similar to that described above.

Further, in the pneumatic tire relating to the third aspect, the rubber layer having the highest wear resistance, i.e., the layer which becomes a convex portion of the irregularities of the worn tread has innumerable particles. In this case, when the tread wears due to the running of the vehicle, innumerable particles appear on the tread of the rubber layer having the highest wear resistance and catch on the iced surface. Accordingly, ice braking ability and ice traction ability can be improved.

Further, when these innumerable particles fall from the rubber due to the friction with the road surface or the like, minute concave portions are formed at the locations of the tread where the particles have fallen. Because the innumerable concave portions formed on the tread absorb the water content between the tread and the road surface, ice braking ability, ice traction ability and wet resistance can be improved.

Namely, in the case in which the rubber layer having the highest wear resistance has particles, an effect in which the particles projected to the tread catch on the road surface and an effect in which water is absorbed by the concave portions where the particles have fallen are obtained.

As a concrete example of the particle, the material whose surface includes aluminum combined hydroxyl group and silicon combined hydroxyl group (Hydilight™ manufactured by Showa Denko K.K. is one example.), syndiotactic-1,2-polybutadiene resin (crystalline syndiotactic-1,2-polybutadiene-type resin) or the like are preferable. However, other materials may be used. Moreover, the diameter of the particle is preferably 5 μm to 250 μm. The configuration of the particle is not particularly important.

On the other hand, in a case in which the rubber layer having low wear resistance has innumerable particles, the rubber layer having low wear resistance can be worn more easily, and the depth of the groove can be further increased.

As a result, ability of absorbing the water content can be increased. Moreover, ice braking ability, ice traction ability and wet resistance can be improved.

Preferably, the rubber layer having the highest wear resistance of said rubber layers has innumerable particles, and the percentage content is 1 to 15 % by weight.

The rubber layer, which becomes the convex portion and has the highest wear resistance, has innumerable particles. Because the percentage content of the particles is 1 to 15 % by weight, it is fully ensured that the particles appeared on the tread of the rubber layer having the highest wear resistance catch on the road surface and that the water content is absorbed by the minute concave portions where the particles have fallen from the rubber.

When the percentage content of the particles is less than 1 % by weight, the number of particles appeared on the tread is decreased so that the catching-on operation cannot be obtained. Moreover, the number of minute concave portions which are formed after the particles fall from the rubber is decreased, and water, which has not been absorbed and drained by the grooves which are obtained in accordance with the difference in wear, is not absorbed. As a result, ice braking ability, ice traction ability and wet resistance do not improve.

On the other hand, when the percentage content of the particles exceeds 15 % by weight, the wear resistance of the rubber layer having high wear resistance lowers, and the difference between the wear resistance of the rubber layer having high wear resistance and that of the rubber layer having low wear resistance becomes small. Accordingly, it is difficult to form grooves which are obtained in accordance with the difference in wear.

Preferably, the rubber layer having the lowest wear resistance of said rubber layers has innumerable particles, and the percentage content is 16 to 30 % by weight.

The wear resistance of the rubber can be reduced by containing particles in the rubber. In the pneumatic tire the rubber layer having the lowest wear resistance has innumerable particles, and the percentage content of the particles is 16 to 30 % by weight. As a result, the wear resistance of the rubber layer having the lowest wear resistance can be further reduced, the wear of the rubber layer having the lowest wear resistance is promoted such that the grooves can be reliably formed on the tread.

When the percentage content of the particles is less than 16 % by weight, an effect in which the wear resistance of the rubber is further lowered by containing the particles is lessened, and the wear resistance of the rubber layer having the lowest wear resistance cannot be fully lowered. Accordingly, it is difficult to form grooves which are obtained in accordance with difference in wear.

On the other hand, when the percentage content of the particles exceeds 30 % by weight, the wear resistance of the entire tread lowers.

Preferably, the rubber layer having the highest wear resistance of said rubber layers and the rubber layer having the lowest wear resistance of said rubber layers have innumerable particles, and the difference in the percentage content between the rubber layer having the highest wear resistance and the rubber layer having the lowest wear resistance is 10 % or more by weight.

Because the difference between the percentage content of the particles of the rubber layer having the highest wear resistance and the percentage content of the particles of the rubber layer having the lowest wear resistance is 10 % or more, the rubber layer having the lowest wear resistance is reliably worn such that the grooves can be reliably formed on the tread.

In a case in which the difference in the percentage content of the particles is less than 10 %, the wear resistance of the rubber layer having high wear resistance is closer to that of the rubber layer having low wear resistance. Thus, it is difficult to form grooves which can be obtained in accordance with the difference in wear.

BRIEF DESCRIPTION OF THE DRAWINGS

Fig. 1 is a plan view of a tread of a pneumatic tire relating to a first embodiment.

Fig. 2 is a cross-sectional view of the tread illustrated in Fig. 1, the view being along a transverse direction of the tire.

Fig. 3 is a perspective view of a rubber band shaped product which will be a cap portion of the tread illustrated in Fig. 2.

Fig. 4 is a cross-sectional view of the tread which has been worn.

Fig. 5 is a cross-sectional view of a tread of a pneumatic tire relating to a second embodiment, the view being along a circumferential direction of the tire.

Fig. 6 is a perspective view in which a portion of a block of a pneumatic tire relating to a third embodiment forms a cross-sectional configuration.

Fig. 7 is a perspective view of a rubber band shaped product for forming the block illustrated in Fig. 6.

Fig. 8 is a perspective view in which a portion of a block of a pneumatic tire relating to a fourth embodiment forms a cross-sectional configuration.

Fig. 9 is an enlarged view of the tread illustrated in Fig. 2 of a pneumatic tire relating to a fifth embodiment of the present invention.

Fig. 10A is an enlarged cross-sectional view of a rubber layer, which has a high wear resistance and contains short fibers, relating to a ninth embodiment.

Fig. 10B is an enlarged cross-sectional view in which the rubber layer having high wear resistance relating to the ninth embodiment has been worn.

Fig. 11A is an enlarged cross-sectional view of a rubber layer, which has a high wear resistance and contains particles, relating to a thirteenth embodiment.

Fig. 11B is an enlarged cross-sectional view in which the rubber layer having high wear resistance relating to the thirteenth embodiment has been worn.

DESCRIPTION OF THE PREFERRED EMBODIMENTS

Embodiments one to four do not form part of the present invention.

First Embodiment

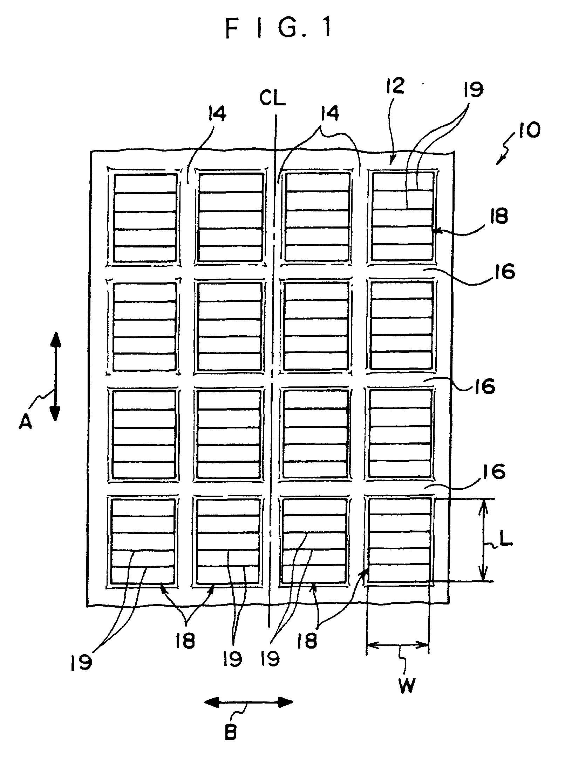

A pneumatic tire 10 relating to a first embodiment will be explained in accordance with Figs. 1 through 4.

The pneumatic tire 10 (size: 185/70 R13, rim: 51/2J-13, internal pressure: 1.9 kg/cm$^2$) of the first embodiment is a radial structured pneumatic tire in which a belt serving as a reinforcing layer and a tread are disposed at an outer circumference of a crown portion of a carcass which extends over a pair of bead cores and is formed in a toroidal shape. Since the internal structure of the tire other than the tread is the same as that of an ordinary radial tire, the description thereof is omitted.

As shown in Fig. 1, a plurality of blocks 18 are formed on a tread 12 by a plurality of circumferential direction grooves 14 and a plurality of lateral grooves 16 which intersect the circumferential direction grooves 14.

Four sipings 19, which extend linearly along the transverse direction of the tire, are formed on each of the block 18 at equal intervals in the circumferential direction of the tire. The ends of the siping 19 open to the side surfaces of the block 18. The width of the siping 19 is 0.4 mm, and the siping 19 is formed at intervals of about 5 mm in the circumferential direction of the tire.

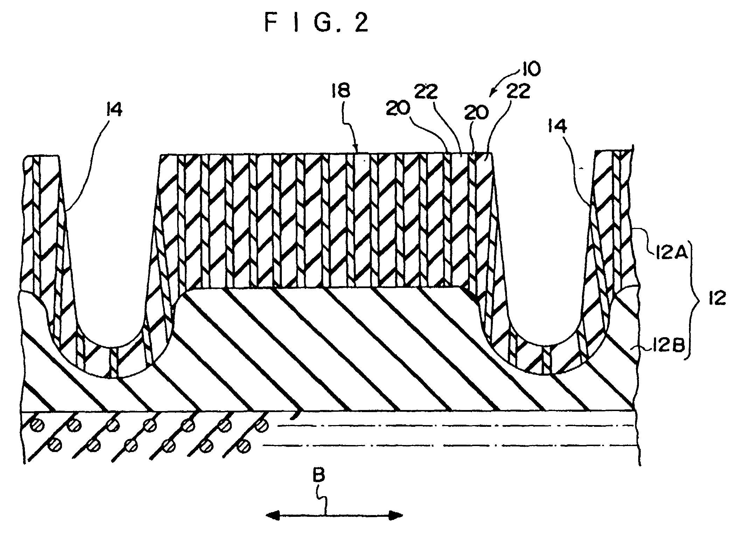

As illustrated in Fig. 2, the tread 12 is formed by a ground portion (cap portion) 12A, which is an upper layer and directly grounds the road surface, and a base portion 12B, which is a lower layer and is disposed in a vicinity of the tire inner side of the cap portion 12A, so as to form a so-called cap/base structure.

In the cap portion 12A, a rubber layer 20 having low wear resistance and a rubber layer 22 having high wear resistance are alternately superposed on one other in the transverse direction of the tire.

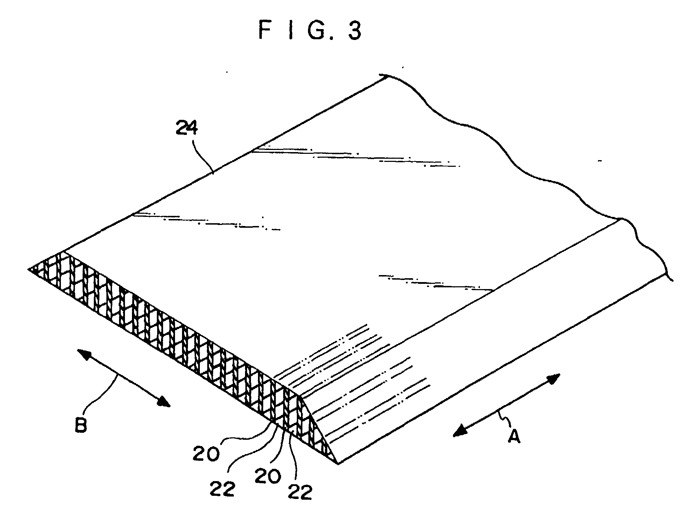

As illustrated in Fig. 3, the pneumatic tire 10 equipped with such tread 12 forms a raw (unvulcanized) rubber band shaped product 24 in which the rubber layer 20 having low wear resistance and the rubber layer 22 having high wear resistance are alternately superposed on one other in the transverse direction of the tire. The pneumatic tire 10 can be made by mounting the rubber band shaped product 24 to the outer circumference of the raw tire and vulcanizing the tire in a mold.

Next, the operation of the first embodiment will be explained.

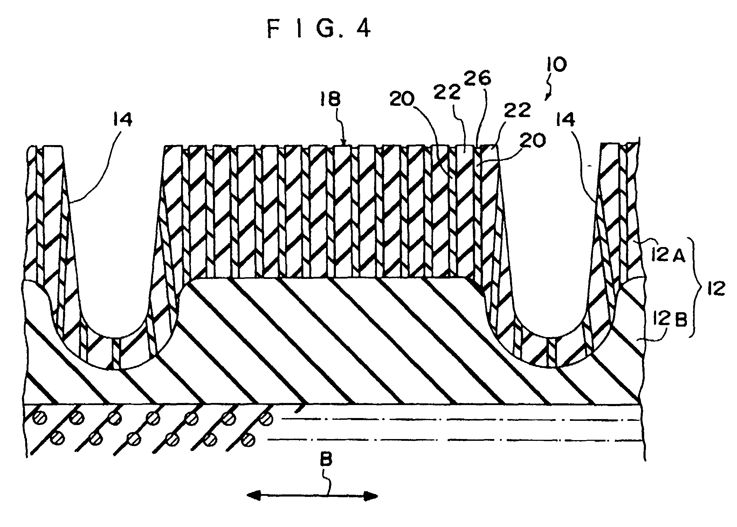

When the surface of the tread 12 wears due to the running of a vehicle, the wear of the rubber layer 20 having low wear resistance progresses more than that of the rubber layer 22 having high wear resistance. Accordingly, as shown in Fig. 4, the rubber layer 20 portion having low wear resistance is lower than the rubber layer 22 portion having high wear resistance, and a plurality of narrow and relatively shallow grooves 26 appear on the surface of the tread 12. The groove 26 appeared in this way forms a shape which extends along the circumferential direction of the tire. Due to the plurality of appeared grooves 26, drainability is obtained, and wet resistance and ice gripping ability (mainly braking ability) are improved.

Further, because the state can be maintained not only at the initial stages of wear but also when the wear progresses, wet resistance and ice gripping ability can be continuously improved.

Additionally, since coefficient of friction in the transverse direction of the tire is improved, side slip resistance at the time of cornering is obtained.

Second Embodiment

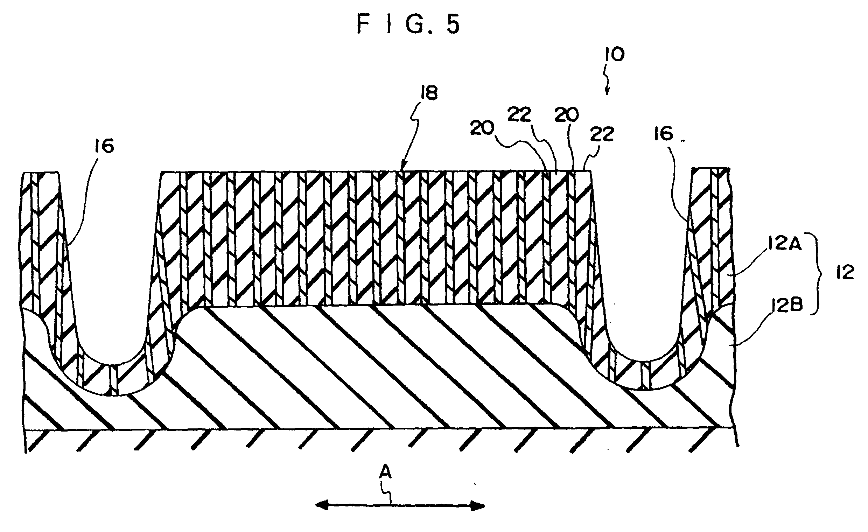

A pneumatic tire 10 relating to a second embodiment will be explained in accordance with Fig. 5. Structures similar to those of the first embodiment are designated by the same reference numerals, and descriptions thereof are omitted.

As illustrated in Fig. 5, in the pneumatic tire 10 relating to the second embodiment, a rubber layer 20 having low wear resistance and a rubber layer 22 having high wear resistance are alternately superposed on one other in the cap portion 12A in the circumferential direction of the tire (the direction of arrow A in Fig. 5).

Next, the operation of the second embodiment will be explained.

As described in the first embodiment, when the surface of the tread 12 wears due to the running of the vehicle, the rubber layer 20 portion having low wear resistance is lower than the rubber layer 22 portion having high wear resistance. In the second embodiment, a plurality of grooves 26 which extend along the transverse direction of the tire appear on the surface of the tread 12. Because the direction of the appeared groove 26 becomes the transverse direction of the tire, braking ability and traction ability on ice improve due to the draining operation of the edge components which extend in the transverse direction of the tire.

Third Embodiment

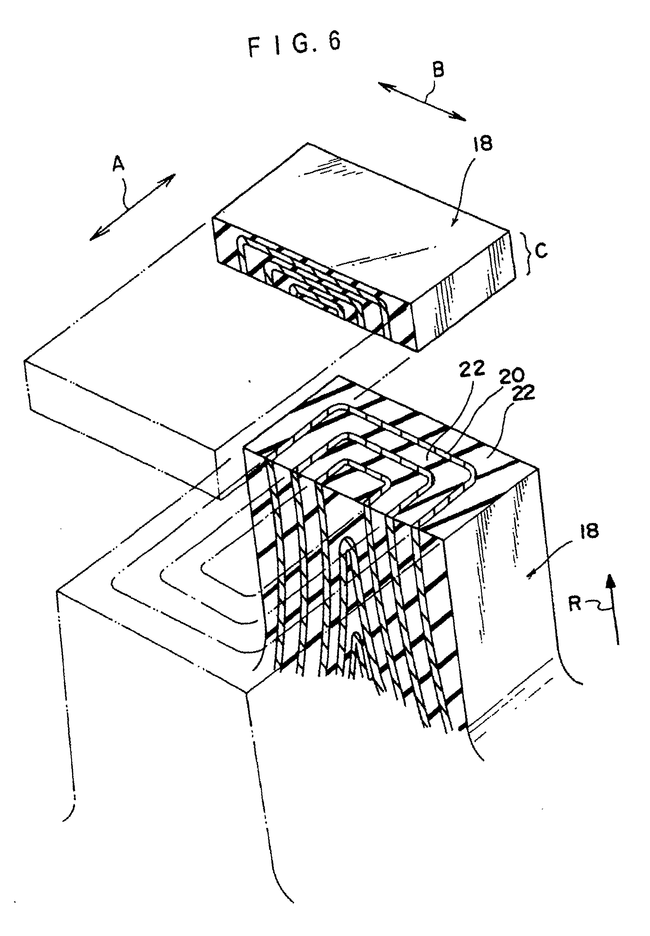

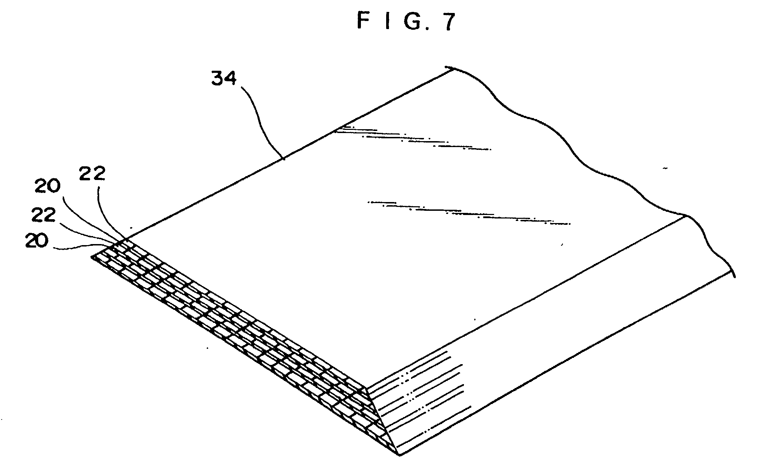

A pneumatic tire 10 relating to a third embodiment will be explained in accordance with Figs. 6 and 7. Structures similar to those of the aforementioned embodiments are designated by the same reference numerals, and descriptions thereof are omitted.

As illustrated in Fig. 6, in a block 18 of the pneumatic tire 10 relating to the third embodiment, when viewed in the cross section orthogonal to the radial direction of the tire (the direction of arrow R), a rubber layer 20 having low wear resistance and a rubber layer 22 having high wear resistance are alternately superposed on one other in the shape of annual rings of a tree.

As illustrated in Fig. 7, the pneumatic tire 10 equipped with such tread 12 forms a raw (unvulcanized) rubber band shaped product 34 in which the rubber layer 20 having low wear resistance and the rubber layer 22 having high wear resistance are alternately superposed on one other in the thickness direction of the tire. The pneumatic tire 10 can be produced by mounting the rubber band shaped product 34 onto the belt of the raw tire and vulcanizing the tire in a mold. When the rubber band shaped product 34 is pressed against the inner surface of the mold, the rubber band shaped product 34 formed by the plurality of layers enters into the plurality of concave portions (block-forming portions) which are formed at the inner surface of the mold. As a result, the annual rings are formed on the block 18.

A predetermined range C of the rubber at the outer circumferential side of the block 18 is formed in accordance with the above-described method. Since the rubber layer 20 having low wear resistance and the rubber layer 22 having high wear resistance are superposed on one other in the radial direction of the tire, it is preferable that the predetermined range C of the rubber is trimmed by buffing or the like after being formed by vulcanization.

Next, the operation of the third embodiment will be explained.

As described before, when the surface of the tread 12 wears due to the running of the vehicle, the rubber layer 20 portion having low wear resistance is lower than the rubber layer 22 portion having high wear resistance. In the third embodiment, a plurality of grooves 26 in the form of annual rings appear on the surface of the tread 12. Because the direction of the appeared groove 26 includes both a component of the transverse direction of the tire and that of the circumferential direction of the tire, draining operation due to the edge effects of the component of the transverse direction of the tire, and drainability due to the component of the circumferential direction of the tire can be simultaneously obtained.

Fourth Embodiment

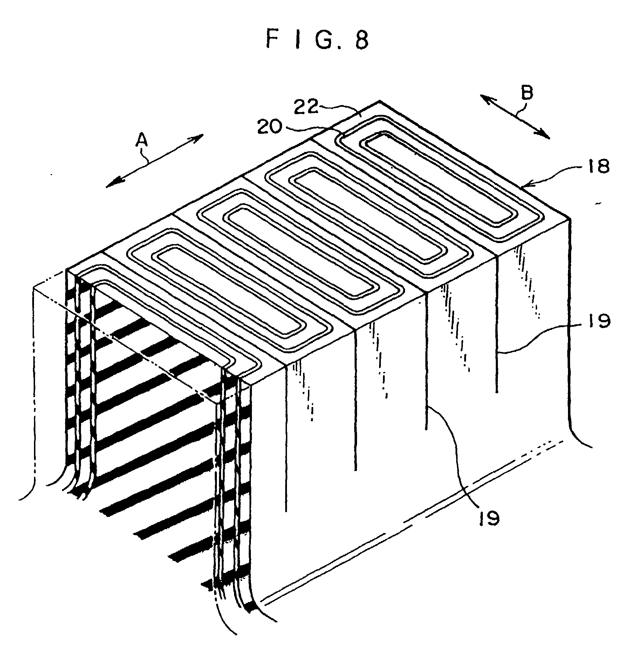

A pneumatic tire 10 relating to a fourth embodiment will be explained in accordance with Fig. 8. Structures similar to those of the aforementioned embodiments are designated by the same reference numerals, and descriptions thereof are omitted.

As illustrated in Fig. 8, sipings 19 which are similar to those of the pneumatic tire 10 described in the first embodiment are formed on a block 18 of the pneumatic tire 10 relating to the fourth embodiment.

The pneumatic tire 10 of the fourth embodiment is manufactured similar to the aforementioned pneumatic tire 10 of the third embodiment. However, annual rings are formed for every small block which is divided by the sipings 19.

Similarly to the aforementioned pneumatic tire 10 of the third embodiment, in the pneumatic tire 10 of the fourth embodiment, draining operation due to the edge effects of the component, in the transverse direction of the tire, of the grooves appeared due to the running of a vehicle, and drainability due to the component of the circumferential direction of the tire can be simultaneously obtained. Further, the edge effects due to the sipings 19 are obtained.

Test Examples

One type of a tire in accordance with Conventional Example, three types of tires in accordance with Examples described above and one type of a tire in accordance with Comparative Example were used so as to compare ice braking ability, ice traction ability and wear resistance.

Method of testing ice braking ability

Tires were mounted on a vehicle and the vehicle was driven on an iced flat road. The brakes were applied at a speed of 20 km/ h. The distance between the locking of wheels and the halt thereof was measured. The inverse number of the distance was expressed as an index number, wherein the inverse number of the distance of the conventional tire was 100. It shows that the larger the numerical value, the better the ice braking ability.

Method of testing ice traction ability

The tires were mounted on the vehicle. The vehicle was started from a state in which the vehicle was halted on the iced flat road. The inverse number of the time in which the vehicle reached a distance of 50 m was expressed as an index number, wherein the inverse number of the time of the conventional tire was 100. It shows that the larger the numerical value, the better the ice traction ability.

Method of testing wear resistance

The tires were mounted on the vehicle. The amount of wear (the depth of the worn groove) after the vehicle was driven 10,000 km was measured. The inverse number of the amount of wear was expressed as an index number, wherein the index number of the amount of wear of the conventional tire was 100. It shows that the larger the numerical value, the better the wear resistance.

Next, the tires of Examples 1 through 3 will be explained.

As shown in Fig. 2, the tire of Example 1 has the cap portion in which the rubber layer having low wear resistance and the rubber layer having high wear resistance are alternately superposed on one other in the transverse direction of the tire. Four blocks are disposed on the tread in the transverse direction of the tire with a pitch of 50 mm in the circumferential direction of the tire. The size of the block in the circumferential direction of the tire is 25 mm, and that of the block in the transverse direction of the tire is 20 mm. The rubbers are used in which the hardness of the rubber serving as the rubber layer having low wear resistance is 38 degrees, and that of the rubber serving as the rubber layer having high wear resistance is 50 degrees. The thickness of the rubber layer and the number of superposed layers are shown in the following Table 1.

As shown in Fig. 5, the tire of Example 2 is the tire in which the rubber layer having low wear resistance and the rubber layer having high wear resistance are alternately superposed on one other in the circumferential direction of the tire. Further, the sipings are provided at the tire as in the same way as the tire of Example 1. The hardness of the rubber layer, the size and arrangement of the block are the same as those of the tire of Example 1. The thickness of the rubber layer and the number of superposed layers are shown in the following Table 1.

As illustrated in Fig. 8, for example, the tire of Example 3 is the tire in which the rubber layer having low wear resistance and the rubber layer having high wear resistance are alternately superposed in the shape of annual rings. The sipings, the hardness of the rubber layer, the size and arrangement of the block are the same as those of the tire of Example 1. The number of superposed layers illustrated in Table 1 is the maximum number of layers appeared on the block, and the thickness of the rubber layer is the average value.

The tire of Comparative Example 1 is the tire in which rubber layers having low wear resistance and rubber layers having high wear resistance are alternately superposed in the transverse direction of the tire. The hardness of the rubber layer, sipings, the size and arrangement of a block are the same as those of the tire of Example 1. The thickness of the rubber layer and the number of superposed layers are shown in the following Table 1.

The tire of Conventional Example 1 is the tire in which an entire cap portion of a tread is formed by a rubber having high wear resistance (the hardness of the rubber is 50 degrees). Sipings, the size and arrangement of a block are the same as those of the tire of Example 1.

The tires whose grooves appeared on the surface of the tread after the vehicle was run in were used in the tests.

## TABLE 1

| | Conv. Ex. 1 | Ex. 1 | Ex. 2 | Ex. 3 | Comp. Ex. 1 |
|---|---|---|---|---|---|
| Arrangement of Rubber Layers | ----- | trans-verse direction | circumferential direction | annual rings shape | trans-verse direction |
| Hardness of Rubber Having High Wear Resistance | 50 degrees | 50 degrees | 50 degrees | 50 degrees | 50 degrees |
| Width of Rubber Having High Wear Resistance | 20 mm | 3 mm | 3 mm | 0.70 mm | 7.5 mm |
| Number of Rubber Layers Having High Wear Resistance (per Block) | 1 | 5 | 6 | max. 19 | 2 |
| Hardness of Rubber Having Low Wear Resistance | ----- | 38 degrees | 38 degrees | 38 degrees | 38 degrees |
| Width of Rubber Having Low Wear Resistance | ----- | 1 mm | 1 mm | 0.35 mm | 5 mm |
| Number of Rubber Layers Having Low Wear Resistance (per Block) | ----- | 5 | 7 | max. 19 | 1 |
| Ice Braking Ability | 100 | 120 | 105 | 111 | 102 |
| Ice Traction Ability | 100 | 105 | 116 | 110 | 98 |
| Wear Resistance | 100 | 95 | 95 | 97 | 94 |

Conv. Ex. = Conventional Example

Ex. = Example

Comp. Ex. = Comparative Example

As illustrated in the above-described Table 1, the ice braking ability of the tire of Example 1 in which the direction of superposed rubber layers is the transverse direction of the tire was particularly better than that of the tire of Conventional Example 1. Also, the ice traction ability of the tire of Example 2 in which the direction of superposed rubber layers is the circumferential direction of the tire was particularly better than that of the tire of Conventional Example 1. Moreover, both the ice braking ability and the ice traction ability of the tire of Example 3 in which the rubber layers are in the shape of annual rings were better than those of the tire of Conventional Example 1.

The numerical values of the wear resistance of the tires of Examples 1 through 3 are slightly worse than that of the tire of the Conventional Example 1. However, the values are not important for practical use.

Because there are no grooves 26 on the tread surface of the pneumatic tire 10 of the previous embodiments when the tire 10 is new, it is necessary that the vehicle runs in for a very short distance. In order to obtain high ice gripping ability when the tire is new, such as up to the time in which the grooves 26 appear due to the difference in wear of the rubbers, a plurality of shallow and narrow grooves, whose size is substantially the same as that of the groove 26 and which disappears when the groove 26 appears, may be formed on the surface of the tread 12.

Further, in the pneumatic tires 10 of the aforementioned first and second embodiments, the rubber layer 20 having low wear resistance and the rubber layer 22 having high wear resistance are linear on the surface of the tread 12. However, the rubber layers 20 and 22 may be wave-shaped or zigzag-shaped.

Fifth Embodiment

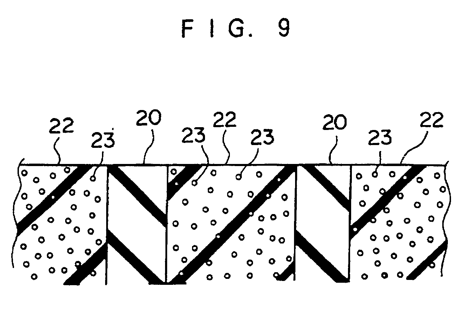

The structure of a pneumatic tire relating to a fifth embodiment is substantially the same as that of the first embodiment, and therefore, portions of the pneumatic tire relating to the fifth embodiment which are different from those of the first embodiment will be mainly explained. A description will be given with reference to Fig. 9 and, if necessary, Figs. 1 through 4 of the first embodiment.

As shown in Fig. 9, in the pneumatic tire 10 of the fifth embodiment, an ordinary non-foamed rubber is used for the rubber layer 20 having low wear resistance, and a so-called foamed rubber, which includes innumerable spherical closed cells 23 serving as minute cavities, is used for the rubber layer having high wear resistance.

As illustrated in Fig. 3 of the first embodiment, the pneumatic tire 10 equipped with such tread 12 forms a raw (unvulcanized) rubber band shaped product 24 in which the rubber layer 20 having low wear resistance and the rubber layer 22, which has high wear resistance and includes foaming agent, are alternately superposed on one other in the transverse direction of the tire. The pneumatic tire 10 can be made by mounting the rubber band shaped product 24 to the outer circumference of the raw tire and vulcanizing the tire in a mold.

The operation of the pneumatic tire of the fifth embodiment is substantially the same as that of the tire of the first embodiment. Further, since the spherical closed cells 23 of the rubber layer having high wear resistance can absorb the water which cannot be drained into the grooves 26, ice braking ability, ice traction ability and wet resistance can be further improved.

Further, as in the fifth embodiment, similarly to the first embodiment, because the state can be maintained not only at the initial stages of wear but also when the wear progresses, ice braking ability, ice traction ability and wet resistance can be continuously improved. Additionally, since the grooves 26 which extend in the circumferential direction of the tire appear on the tread, an effect of preventing the side slip at the time of cornering is obtained.

Sixth Embodiment

The structure of a pneumatic tire relating to a sixth embodiment is substantially the same as that of the second embodiment, and therefore, portions of the pneumatic tire relating, to the sixth embodiment which are different from the second embodiment will be mainly explained.

The pneumatic tire of the sixth embodiment has a structure in which the rubber layer 22 having high wear resistance, which is disclosed in the fifth embodiment, of the pneumatic tire of the second embodiment includes innumerable spherical closed cells.

The operation of the pneumatic tire of the sixth embodiment which is substantially the same as that of the tire of the second embodiment. Further, since the spherical closed cells of the rubber layer having high wear resistance can absorb the water which cannot be drained into the grooves, ice braking ability, ice traction ability and wet resistance can be further improved.

Seventh Embodiment

The structure of a pneumatic tire relating to a seventh embodiment is substantially the same as that of the third embodiment, and therefore, portions of the pneumatic tire relating to the seventh embodiment which are different from the third embodiment will be mainly explained.

The pneumatic tire of the seventh embodiment has a structure in which the rubber layer 22 having high wear resistance, which is disclosed in the fifth embodiment, of the pneumatic tire of the third embodiment includes innumerable spherical closed cells.

Accordingly, the pneumatic tire of the seventh embodiment has operations and effects of both the third embodiment and the fifth embodiment.

Eighth Embodiment

The structure of a pneumatic tire relating to an eighth embodiment is substantially the same as that of the fourth embodiment, and therefore, portions of the pneumatic tire relating to the eighth embodiment which are different from the fourth embodiment will be mainly explained.

The pneumatic tire of the eighth embodiment has a structure in which the rubber layer 22 having high wear resistance, which is disclosed in the fifth embodiment, of the pneumatic tire of the fourth embodiment includes innumerable spherical closed cells.

Accordingly, the pneumatic tire of the eighth embodiment has operations and effects of both the fourth embodiment and the fifth embodiment.

Test Examples

Two types of tires in accordance with Conventional Example, 15 types of tires in accordance with Examples to which the present invention is applied, and one type of a tire in accordance with Comparative Example were used for comparing ice braking ability, ice traction ability and wear resistance.

A method of testing ice braking ability, a method of testing ice traction ability and a method of testing wear resistance are the same as those described in the first through fourth embodiments.

Next, a test tire will be explained.

Each of the test tires has a block pattern shown in Fig. 1. Four blocks are disposed on the tread in the transverse direction of the tire with a pitch of 50 mm in the circumferential direction of the tire. The size of the block in the circumferential direction of the tire is 25 mm, and that of the block in the transverse direction of the tire is 20 mm.

The rubbers are used in which the hardness of the rubber serving as the rubber layer having low wear resistance is 38 degrees, and that of the rubber serving as the rubber layer having high wear resistance is 50 degrees.

The tires of Examples 4 through 14 are the tires in which foamed rubber is used for the rubber layer having low wear resistance or the rubber layer having high wear resistance

The tires of Examples 15 and 16 are the tires in which short fibers are mixed to the rubber layer having high wear resistance. A cylindrical polyethylene terephthalate having an average diameter of 50 μm and a length of 2000 μm is used for the short fiber. The percentage contents of the short fibers are shown in the following Tables 2 through 4.

The tires of Examples 17 and 18 are the tires in which the innumerable particles are contained in the rubber layer having high wear resistance. The syndiotactic-1,2-polybutadiene resin having an average diameter of 50 μm is used for the particle. The percentage content of the particles is shown in the following Tables 2 through 4.

The tire of Comparative Example 2 is the tire in which a non-foamed rubber layer having low wear resistance and a non-foamed rubber layer having high wear resistance are alternately superposed on one other in the transverse direction of the tire. The hardness of the rubber layer, sipings, and the size and arrangement of a block are the same as those of the tire of Example 4. The thickness of the rubber layer and the number of superposed layers are shown in the following Tables 2 through 4.

The tire of Conventional Example 2 is the tire in which the entire cap portion of a tread is formed by a foamed rubber. Sipings, the size and arrangement of a block are the same as those of the tire of Example 4.

The tire of Conventional Example 3 is the tire in which the entire cap portion of a tread is formed by a rubber having high wear resistance (the hardness of the rubber is 50 degrees). Sipings, the size and arrangement of a block are the same as those of the tire of Example 4.

The number of superposed rubber layers, the thickness of the rubber layer, the configuration of superposed rubber layers, the cavity ratio of the rubber layer, the difference in the cavity ratios, the ratio of cells having protective layers to entire cells, the test result of the ice braking ability, the test result of the ice traction ability, and the test result of the wear resistance are shown in the following Tables 2 through 4.

The tire whose grooves appeared on the tread surface after the vehicle was run in was used in the tests.

EP 0 780 245 B1

TABLE 2

| | Ex. 4 | Ex. 5 | Ex. 6 | Ex. 7 | Ex. 8 | Ex. 9 | Ex. 10 | Ex. 11 |
|---|---|---|---|---|---|---|---|---|
| Number of Superposed Rubber Layers Having the Highest Wear Resistance per 20 mm (pieces) /Thickness (mm) | 5/3 | 5/3 | 5/3 | 5/3 | 5/3 | 5/3 | 5/3 | 5/3 |
| Number of Superposed Rubber Layers Having the Lowest Wear Resistance per 20 mm (pieces) /Thickness (mm) | 5/1 | 5/1 | 5/1 | 5/1 | 5/1 | 5/1 | 5/1 | 5/1 |
| Cavity Ratio of Rubber Layer Having the Highest Wear Resistance: a (%) | 3 | 10 | 20 | 23 | 0 | 0 | 0 | 0 |
| Cavity Ratio of Rubber Layer Having the Lowest Wear Resistance: b (%) | 0 | 0 | 0 | 0 | 20 | 22 | 70 | 75 |
| Difference in Cavity Ratios: b-a (%) | -3 | -10 | -20 | -23 | 20 | 22 | 70 | 75 |
| Ratio of Cavities Having Protective Layer *1 between Cavity and Rubber to Cavities of Rubber Layer Having Highest Wear Resistance (%) | 0 | 0 | 0 | 0 | 0 | 0 | 0 | 0 |
| Percentage Content of Short Fibers*2 of Rubber Layer Having the Highest Wear Resistance (%) | 0 | 0 | 0 | 0 | 0 | 0 | 0 | 0 |
| Percentage Content of Particles*3 of Rubber Layer Having the Highest Wear Resistance (%) | 0 | 0 | 0 | 0 | 0 | 0 | 0 | 0 |
| Superposed State of Rubber Layers (Superposed Direction) | trans-verse | trans-verse | trans-verse | trans-verse | trans-verse | trans-verse | trans-verse | trans-verse |
| Ice Braking Ability Test (Index Number) | 105 | 110 | 115 | 115 | 102 | 105 | 110 | 110 |
| Ice Traction Ability Test (Index Number) | 102 | 105 | 107 | 107 | 101 | 102 | 105 | 105 |
| Wear Resistance Test (Index Number) | 100 | 99 | 97 | 90 | 99 | 97 | 95 | 90 |

Ex. = Example

15

## TABLE 3

| | Ex. 12 | Ex. 13 | Ex. 14 | Ex. 15 | Ex. 16 |
|---|---|---|---|---|---|
| Number of Superposed Rubber Layers Having the Highest Wear Resistance per 20 mm (pieces) /Thickness (mm) | 5/3 | 5/3 | 5/3 | 5/3 | 5/3 |
| Number of Superposed Rubber Layers Having the Lowest Wear Resistance per 20 mm (pieces) /Thickness (mm) | 5/1 | 5/1 | 5/1 | 5/1 | 5/1 |
| Cavity Ratio of Rubber Layer Having the Highest Wear Resistance: a (%) | 10 | 10 | 10 | 10 | 10 |
| Cavity Ratio of Rubber Layer Having the Lowest Wear Resistance: b (%) | 22 | 30 | 40 | 40 | 40 |
| Difference in Cavity Ratios: b-a (%) | 12 | 20 | 30 | 30 | 30 |
| Ratio of Cavities Having Protective Layer *1 between Cavity and Rubber to Cavities of Rubber Layer Having Highest Wear Resistance (%) | 0 | 0 | 0 | 0 | 0 |
| Percentage Content of Short Fibers*2 of Rubber Layer Having the Highest Wear Resistance (%) | 0 | 0 | 0 | 5 | 10 |
| Percentage Content of Particles*3 of Rubber Layer Having the Highest Wear Resistance (%) | 0 | 0 | 0 | 0 | 0 |
| Superposed State of Rubber Layers (Superposed Direction) | trans-verse | trans-verse | trans-verse | trans-verse | trans-verse |
| Ice Braking Ability Test (Index Number) | 110 | 117 | 120 | 127 | 130 |
| Ice Traction Ability Test (Index Number) | 105 | 108 | 110 | 119 | 121 |
| Wear Resistance Test (Index Number) | 95 | 93 | 92 | 90 | 88 |

Ex. = Example

## TABLE 4

| | Ex. 17 | Ex. 18 | Comp. Ex. 2 | Conv. Ex. 2 | Conv. Ex. 3 |
|---|---|---|---|---|---|
| Number of Superposed Rubber Layers Having the Highest Wear Resistance per 20 mm (pieces) /Thickness (mm) | 5/3 | 5/3 | 5/3 | 1/20 | 1/20 |
| Number of Superposed Rubber Layers Having the Lowest Wear Resistance per 20 mm (pieces) /Thickness (mm) | 5/1 | 5/1 | 5/1 | 0/0 | 0/0 |
| Cavity Ratio of Rubber Layer Having the Highest Wear Resistance: a (%) | 10 | 10 | 0 | 20 | 0 |
| Cavity Ratio of Rubber Layer Having the Lowest Wear Resistance: b (%) | 40 | 40 | 0 | ----- | ----- |
| Difference in Cavity Ratios: b-a (%) | 30 | 30 | 0 | ----- | ----- |
| Ratio of Cavities Having Protective Layer *1 between Cavity and Rubber to Cavities of Rubber Layer Having the Highest Wear Resistance (%) | 0 | 0 | 0 | 0 | 0 |
| Percentage Content of Short Fibers*2 of Rubber Layer Having the Highest Wear Resistance (%) | 0 | 0 | 0 | 0 | 0 |
| Percentage Content of Particles*3 of Rubber Layer Having the Highest Wear Resistance (%) | 5 | 10 | 0 | 0 | 0 |
| Superposed State of Rubber Layers (Superposed Direction) | transverse | transverse | transverse | ----- | ----- |
| Ice Braking Ability Test (Index Number) | 126 | 129 | 100 | 100 | 80 |
| Ice Traction Ability Test (Index Number) | 121 | 124 | 100 | 100 | 90 |
| Wear Resistance Test (Index Number) | 90 | 88 | 100 | 100 | 110 |

Ex. = Example

Comp. Ex. = Comparative Example

Conv. Ex. = Conventional Example

wherein,

Protective layer *1 = material: PE (polyethylene), the average thickness: 4 μ m
Short fiber *2 = material: polyethylene terephthalate, a cylindrical body having an average diameter of 50 μm and an average length of 2000 μm
Particle *3 = material: syndiotactic-1,2-polybutadiene resin, a sphere having an average diameter of 50 μm

**EP 0 780 245 B1**

The index number of the wear resistance is not particularly important for practical use provided that the index number is 90 or more.

Because there are no grooves 26 on the tread surface of the pneumatic tire 10 of the previous embodiments when the tire 10 is new, it is necessary that the vehicle runs in for a very short distance. In order to obtain high ice gripping ability when the tire is new, such a up to the time in which the grooves 26 appear due to the difference in wear of the rubbers, a plurality of shallow and narrow grooves, whose size is substantially the same as that of the groove 26 and which disappears when the groove 26 appears, may be formed on the surface of the tread 12.

Further, in the pneumatic tires 10 of the aforementioned fifth and sixth embodiments, the rubber layer 20 having low wear resistance and the rubber layer 22 having high wear resistance are linear on the surface of the tread 12. However, the rubber layers 20 and 22 may be wave-shaped or zigzag-shaped.

Ninth Embodiment

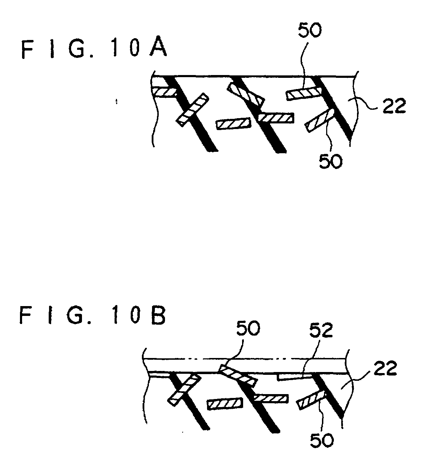

The structure of a pneumatic tire relating to a ninth embodiment is substantially the same as that of the first embodiment, and therefore, portions of the pneumatic tire relating to the ninth embodiment which are different from those of the first embodiment will be mainly explained. A description will be given with reference to Figs. 10A and 10B and, if necessary, Figs. 1 through 4 of the first embodiment.

As shown in Fig. 10A, the rubber which includes innumerable short fibers 50 is used for a rubber layer 22 having high wear resistance.

As illustrated in Fig. 3 of the first embodiment, the pneumatic tire 10 equipped with such tread 12 forms a raw (unvulcanized) rubber band shaped product 24 in which a rubber layer 20 having low wear resistance and a rubber layer 22, which has high wear resistance and includes the short fibers 50, are alternately superposed on one other in the transverse direction of the tire. The pneumatic tire 10 can be made by mounting the rubber band shaped product 24 to the outer circumference of the raw tire and vulcanizing the tire in a mold.

The pneumatic tire of the ninth embodiment provides an operation which is substantially the same as that of the first embodiment. As illustrated in Fig. 10B, when the rubber layer 22 having high wear resistance wears, the innumerable short fibers 50 which appeared on the tread catch on the iced surface. Accordingly, ice braking ability and ice traction ability can be further improved.

Further, when these innumerable short fibers 50 fall from the rubber due to the friction with the road surface or the like, minute concave portions 52 are formed at the locations of the tread where the short fibers 50 have fallen. Because the innumerable concave portions 52 formed on the tread absorb the water content between the tread and the road surface, ice braking ability, ice traction ability and wet resistance can be further improved.

Further, because the state can be maintained not only at the initial stages of wear but also when the wear progresses, ice braking ability, ice traction ability and wet resistance can be continuously improved.

Additionally, since the grooves 26 which extend in the circumferential direction of the tire appear on the tread, an effect of preventing the side slip at the time of cornering is obtained.

Tenth Embodiment

The structure of a pneumatic tire relating to a tenth embodiment is substantially the same as that of the second embodiment, and therefore, portions of the pneumatic tire relating to the tenth embodiment which are different from the second embodiment will be mainly explained.

The pneumatic tire of the tenth embodiment has a structure in which the pneumatic tire of the second embodiment includes short fibers disclosed in the ninth embodiment.

Consequently, the pneumatic tire of the tenth embodiment provides operations and effects which are similar to those of the second embodiment. Since the short fibers 50 which appeared on the tread of the rubber layer 22 having high wear resistance catch on the iced surface, and the concave portions 52 in which the short fibers 50 have fallen absorb water between the tread and the road surface, ice braking ability, ice traction ability and wet resistance can be further improved.

Eleventh Embodiment

The structure of a pneumatic tire relating to an eleventh embodiment is substantially the same as that of the third embodiment, and therefore, portions of the pneumatic tire relating to the eleventh embodiment which are different from the third embodiment will be mainly explained.

The pneumatic tire of the eleventh embodiment has a structure in which the pneumatic tire of the third embodiment includes short fibers disclosed in the ninth embodiment.

Consequently, the pneumatic tire of the eleventh embodiment provides operations and effects which are similar to those of the third embodiment. Since the short fibers 50 appeared on the tread of the rubber layer 22 having high wear resistance catch on the iced surface, and the concave portions 52 in which the short fibers 50 have fallen absorb water between the tread and the road surface, ice braking ability, ice traction ability and wet resistance can be further improved.

Twelfth Embodiment

The structure of a pneumatic tire relating to a twelfth embodiment is substantially the same as that of the fourth embodiment, and therefore, portions of the pneumatic tire relating to the twelfth embodiment which are different from the fourth embodiment will be mainly explained.

The pneumatic tire of the twelfth embodiment has a structure in which the pneumatic tire of the fourth embodiment includes short fibers disclosed in the ninth embodiment.

Consequently, the pneumatic tire of the twelfth embodiment provides operations and effects which are similar to those of the fourth embodiment. Since the short fibers appeared on the tread of the rubber layer 22 having high wear resistance catch on the iced surface, and the concave portions 52 in which the short fibers 50 have fallen absorb water between the tread and the road surface, ice braking ability, ice traction ability and wet resistance can be further improved.

Test Examples

One type of a tire in accordance with Conventional Example, 16 types of tires in accordance with Examples to which the present invention is applied, and one type of a tire in accordance with Comparative Example were used for comparing ice braking ability, ice traction ability and wear resistance.

A method of testing ice braking ability, a method of testing ice traction ability and a method of testing wear resistance are the same as those of the first through fourth embodiments.

Next, a test tire will be explained.

Each of the test tires has a block pattern shown in Fig. 1. Four blocks are disposed on the tread in the transverse direction of the tire with a pitch of 50 mm in the circumferential direction of the tire. The size of the block in the circumferential direction of the tire is 25 mm, and that of the block in the transverse direction of the tire is 20 mm.

The rubbers are used in which the hardness of the rubber serving as a rubber layer having low wear resistance is 38 degrees, and that of the rubber serving as a rubber layer having high wear resistance is 50 degrees.

The tires of Examples 19 through 34 are the tires in which the rubber layer having low wear resistance and/or the rubber layer having high wear resistance includes(s) short fibers. For the short fibers, cylindrical polyethylene terephthalate whose average diameter is 50 μm and whose average length is 2000 μm is used. The percentage contents of the short fibers are shown in the following Tables 5 through 7.

The tires of Examples 29 and 30 are the tires in which a foamed rubber is used for the rubber layer having high wear resistance.

The cavity ratio Vs is represented by;

$$Vs = (\rho_0 / \rho_1 - 1) \times 100 \ (\%)$$

wherein,

$\rho_1$ is the density (g / cm$^3$) of the rubber having minute cavities;
$\rho_0$ is the density (g / cm$^3$) of a solid-phase portion of the rubber having minute cavities.

When the foaming ratio Vs of the foamed rubber is increased, the wear resistance thereof is decreased.

In order to absorb the water membrane efficiently, the average diameter of the minute cavity is preferably 5 to 150 μm, and more preferably 10 to 100 μm.

When the cavity ratio of the rubber layer having the highest wear resistance is less than 2 %, the effect of absorbing the water which has not be drained into the grooves cannot be obtained. On the other hand, when the cavity ratio of the rubber layer having the highest wear resistance is more than 20 %, the wear resistance is reduced so that its wear resistance is closer to that of the rubber layer having low wear resistance. As a result, the depth of the groove appeared on the tread cannot be increased and the drainability is lowered.

The tires of Examples 31 and 32 are the tires in which the innumerable particles which have fallen from the rubber due to the friction with the tread or the like are contained in the rubber layer having high wear resistance. The syndiotactic-1,2-polybutadiene resin having an average diameter of 50 μm is used for the particle. The percentage contents of the particles are shown in the following Tables 5 through 7.

The tire of Example 34 is the tire in which the rubber layer having high wear resistance and the rubber layer having low wear resistance are superposed on one other in the block in the shape of annual rings. The number of superposed layers shown in the Tables is the maximum number of layers appeared in the block, and the thickness of the rubber layer is the average value.

The tire of Comparative Example 3 is the tire in which a rubber layer, which has low wear resistance and does not include short fibers, and a rubber layer, which has high wear resistance and does not include short fibers, are alternately superposed on one other in the transverse direction of the tire. The hardness of the rubber layer, sipings, and the size and arrangement of a block are the same as those of the tire of Example 19. The thickness of the rubber layer and the number of superposed layers are shown in the following Tables 5 through 7.

The tire of Conventional Example 4 is the tire in which the entire cap portion of a tread is formed by a rubber layer which has high wear resistance and includes short fibers. Sipings, the size and arrangement of a block are the same as those of the tire of Example 19.

The number of superposed rubber layers, the thickness of the rubber layer, the configuration of the superposed rubber layers, the percentage content of short fibers, the difference in the percentage contents, the percentage content of particles, the test result of the ice braking ability, the test result of the ice traction ability, and the test result of the wear resistance are shown in the following Tables 5 through 7.

The tire whose grooves appeared on the tread surface after the vehicle was run in was used in the tests.

## TABLE 5

|  | Ex. 19 | Ex. 20 | Ex. 21 | Ex. 22 | Ex. 23 | Ex. 24 |
|---|---|---|---|---|---|---|
| Number of Superposed Rubber Layers Having the Highest Wear Resistance per 20 mm (pieces) /Thickness (mm) | 5/3 | 5/3 | 5/3 | 5/3 | 5/3 | 5/3 |
| Number of Superposed Rubber Layers Having the Lowest Wear Resistance per 20 mm (pieces) / Thickness (mm) | 5/1 | 5/1 | 5/1 | 5/1 | 5/1 | 5/1 |
| Percentage Content of Short Fibers of Rubber Layer Having the Highest Wear Resistance: a (%) | 2 | 15 | 17 | 0 | 0 | 0 |
| Percentage Content of Short Fibers of Rubber Layer Having the Lowest Wear Resistance: b (%) | 0 | 0 | 0 | 15 | 17 | 30 |
| Difference in Percentage Contents: b-a (%) | -2 | -15 | -17 | 15 | 17 | 30 |
| Cavity Ratio of Rubber Layer Having the Highest Wear Resistance (%) | 0 | 0 | 0 | 0 | 0 | 0 |
| Percentage Content of Particles of Rubber Layer Having the Highest Wear Resistance (%) | 0 | 0 | 0 | 0 | 0 | 0 |
| Superposed State of Rubber Layers (Superposed Direction) | trans-verse | trans-verse | trans-verse | trans-verse | trans-verse | trans-verse |
| Ice Braking Ability Test (Index Number) | 106 | 117 | 117 | 104 | 112 | 117 |
| Ice Traction Ability Test (Index Number) | 102 | 107 | 107 | 101 | 105 | 107 |
| Wear Resistance Test (Index Number) | 100 | 97 | 90 | 99 | 97 | 95 |

Ex. = Example

## TABLE 6

| | Ex. 25 | Ex. 26 | Ex. 27 | Ex. 28 | Ex. 29 | Ex. 30 |
|---|---|---|---|---|---|---|
| Number of Superposed Rubber Layers Having the Highest Wear Resistance per 20 mm (pieces) /Thickness (mm) | 5/3 | 5/3 | 5/3 | 5/3 | 5/3 | 5/3 |
| Number of Superposed Rubber Layers Having the Lowest Wear Resistance per 20 mm (pieces) / Thickness (mm) | 5/1 | 5/1 | 5/1 | 5/1 | 5/1 | 5/1 |
| Percentage Content of Short Fibers of Rubber Layer Having the Highest Wear Resistance: a (%) | 0 | 5 | 5 | 5 | 5 | 5 |
| Percentage Content of Short Fibers of Rubber Layer Having the Lowest Wear Resistance: b (%) | 32 | 12 | 20 | 30 | 20 | 20 |
| Difference in Percentage Contents: b-a (%) | 32 | 7 | 15 | 25 | 15 | 15 |
| Cavity Ratio of Rubber Layer Having the Highest Wear Resistance (%) | 0 | 0 | 0 | 0 | 10 | 20 |
| Percentage Content of Particles of Rubber Layer Having the Highest Wear Resistance (%) | 0 | 0 | 0 | 0 | 0 | 0 |
| Superposed State of Rubber Layers (Superposed Direction) | trans-verse | trans-verse | trans-verse | trans-verse | trans-verse | trans-verse |
| Ice Braking Ability Test (Index Number) | 117 | 117 | 122 | 125 | 128 | 131 |
| Ice Traction Ability Test (Index Number) | 108 | 107 | 110 | 112 | 113 | 114 |
| Wear Resistance Test (Index Number) | 90 | 95 | 93 | 92 | 90 | 88 |

Ex. = Example

## TABLE 7

| | Ex. 31 | Ex. 32 | Ex. 33 | Ex. 34 | Comp. Ex. 3 | Conv. Ex. 4 |
|---|---|---|---|---|---|---|
| Number of Superposed Rubber Layers Having the Highest Wear Resistance per 20 mm (pieces) /Thickness (mm) | 5/3 | 5/3 | 5/3 | 19/ 0.70 | 5/3 | 5/3 |
| Number of Superposed Rubber Layers Having the Lowest Wear Resistance per 20 mm (pieces) / Thickness (mm) | 5/1 | 5/1 | 5/1 | 19/ 0.35 | 5/1 | 5/1 |
| Percentage Content of Short Fibers of Rubber Layer Having the Highest Wear Resistance: a (%) | 5 | 5 | 5 | 5 | 0 | 10 |
| Percentage Content of Short Fibers of Rubber Layer Having the Lowest Wear Resistance: b (%) | 20 | 20 | 20 | 20 | 0 | 0 |
| Difference in Percentage Contents: b-a (%) | 15 | 15 | 15 | 15 | 0 | -10 |
| Cavity Ratio of Rubber Layer Having the Highest Wear Resistance (%) | 0 | 0 | 0 | 0 | 0 | 0 |
| Percentage Content of Particles of Rubber Layer Having the Highest Wear Resistance (%) | 5 | 10 | 0 | 0 | 0 | 0 |
| Superposed State of Rubber Layers (Superposed Direction) | trans- verse | trans- verse | circum ferenti al | annual rings | trans- verse | ----- |
| Ice Braking Ability Test (Index Number) | 126 | 129 | 112 | 117 | 100 | 100 |
| Ice Traction Ability Test (Index Number) | 116 | 119 | 120 | 115 | 100 | 100 |
| Wear Resistance Test (Index Number) | 90 | 88 | 93 | 93 | 100 | 100 |

Ex. = Example

Comp. Ex. = Comparative Example

Conv. Ex. = Conventional Example

Short fiber = material: polyethylene terephthalate, a cylindrical body having an average diameter of 50 $\mu$m

and an average length of 2000 μm

Particle = material: sydiotactic-1,2-polybutadiene resin, a sphere having an average diameter of 50 μm

As illustrated in the above-described Tables 5 through 7, the ice braking ability and the ice traction ability of the tires of Example 19 through 34, in which the rubber layers include short fibers, were better than those of the tires of Conventional Example 4 and Comparative Example 3.

Above all, the ice braking abilities of the tires of Examples 19 through 32, in which the direction of superposed rubber layers is the transverse direction of the tire, were better than the ice traction abilities thereof.

Moreover, the ice traction ability of the tire of Example 33, in which the direction of superposed rubber layers is the circumferential direction of the tire, was better than the ice braking ability thereof.

Further, both the ice braking ability and the ice traction ability of the tire of Example 34, in which the rubber layers are formed in the shape of annual rings, were substantially on the same level.

The index number of the wear resistance is not particularly important for practical use provided that the index number is 90 or more.

Because there are no grooves 26 on the tread surface of the pneumatic tire 10 of the previous ninth through twelfth embodiments when the tire 10 is new, it is necessary that the vehicle runs in for a very short distance. In order to obtain high ice gripping ability when the tire is new, such as up to the time in which the grooves 26 appear due to the difference in wear of the rubbers, a plurality of shallow and narrow grooves, whose size is substantially the same as that of the groove 26 and which disappears when the groove 26 appears, may be formed on the surface of the tread 12.

Further, in the pneumatic tires 10 of the aforementioned ninth and tenth embodiments, the rubber layer 20 having low wear resistance and the rubber layer 22 having high wear resistance are linear on the surface of the tread 12. However, the rubber layers 20 and 22 may be wave-shaped or zigzag-shaped.

Thirteenth Embodiment

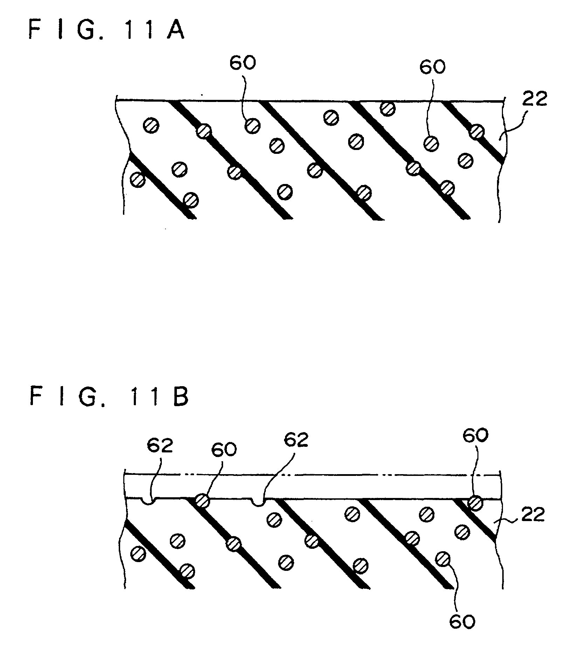

The structure of a pneumatic tire relating to a thirteenth embodiment is substantially the same as that of the first embodiment, and therefore, portions of the pneumatic tire relating to the thirteenth embodiment which are different from those of the first embodiment will be mainly explained. A description will be given with reference to Figs. 11A and 11B and, if necessary, Figs. 1 through 4 of the first embodiment.

As shown in Fig. 11A, the rubber which includes innumerable particles 60 is used for a rubber layer 22 having high wear resistance.

As illustrated in Fig. 3 of the first embodiment, the pneumatic tire 10 equipped with such tread 12 forms a raw (unvulcanized) rubber band shaped product 24 in which the rubber layer 20 having low wear resistance and the rubber layer 22, which has high wear resistance and includes particles 60, are alternately superposed on one other in the transverse direction of the tire. The pneumatic tire 10 can be made by mounting the rubber band shaped product 24 to the outer circumference of the raw tire and vulcanizing the tire in a mold.

The pneumatic tire of the thirteenth embodiment provides operations and effects which are similar to those of the first embodiment. As illustrated in Fig. 11B, when the rubber layer 22 having high wear resistance wears, the innumerable particles 60 which appeared on the tread catch on the iced surface. Accordingly, ice braking ability and ice traction ability can be further improved.

Further, when these innumerable particles 60 fall from the rubber due to the friction with the road surface or the like, minute concave portions 62 are formed at the locations of the tread where the particles 60 have fallen. Because the innumerable concave portions 62 formed on the tread absorb the water content between the tread and the road surface, ice braking ability, ice traction ability and wet resistance can be further improved.

Namely, the present invention obtains an effect in which the particles 60 projecting to the tread of the rubber layers 22 having high wear resistance catch on the road surface and an effect in which water is absorbed by the concave portions 62 where the particles 60 have fallen.

Further, because the state can be maintained not only at the initial stages of wear but also when the wear progresses, ice braking ability, ice traction ability and wet resistance can be continuously improved.

Additionally, since the grooves 26 which extend in the circumferential direction of the tire appear on the tread, an effect of preventing the side slip at the time of cornering is obtained.

Fourteenth Embodiment

The structure of a pneumatic tire relating to a fourteenth embodiment is substantially the same as that of the second embodiment, and therefore, portions of the pneumatic tire relating to the fourteenth embodiment which are different from the second embodiment will be mainly explained.

The pneumatic tire of the fourteenth embodiment has a structure in which the pneumatic tire of the second embodiment includes particles of the thirteenth embodiment.

Consequently, the pneumatic tire of the fourteenth embodiment provides operations and effects which are similar to those of the tire of the second embodiment. Since the particles appeared on the tread of the rubber layer 22 having high wear resistance catch on the iced surface, and the concave portions 62 (see Fig. 11B) in which the particles 60 have fallen absorb water between the tread and the road surface, ice braking ability, ice traction ability and wet resistance can be further improved.

Fifteenth Embodiment

The structure of a pneumatic tire relating to a fifteenth embodiment is substantially the same as that of the third embodiment, and therefore, portions of the pneumatic tire relating to the fifteenth embodiment which are different from the third embodiment will be mainly explained.

The pneumatic tire of the fifteenth embodiment has a structure in which the pneumatic tire of the third embodiment includes particles of the thirteenth embodiment.

Consequently, the pneumatic tire of the fifteenth embodiment provides operations and effects which are similar to those of the tire of the third embodiment. Since the particles 60 appeared on the tread of the rubber layer 22 having high wear resistance catch on the iced surface, and the concave portions 62 (see Fig. 11B) in which the particles 60 have fallen absorb water between the tread and the road surface, ice braking ability, ice traction ability and wet resistance can be further improved.

Sixteenth Embodiment

The structure of a pneumatic tire relating to a sixteenth embodiment is substantially the same as that of the fourth embodiment, and therefore, portions of the pneumatic tire relating to the sixteenth embodiment which are different from the fourth embodiment will be mainly explained.

The pneumatic tire of the sixteenth embodiment has a structure in which the pneumatic tire of the fourth embodiment includes particles of the thirteenth embodiment.

Consequently, the pneumatic tire of the sixteenth embodiment provides operations and effects which are similar to those of the tire of the fourth embodiment. Since the particles 60 appeared on the tread of the rubber layer 22 having high wear resistance catch on the iced surface, and the concave portions 62 (see Fig. 11B) in which the particles 60 have fallen absorb water between the concave portion 62 and the road surface, ice braking ability, ice traction ability and wet resistance can be further improved.

Test Examples

One type of a tire in accordance with Conventional Example, 16 types of tires in accordance with Examples relating to any of the thirteenth through sixteenth embodiments, and one type of a tire in accordance with Comparative Example were used for comparing ice braking ability, ice traction ability and wear resistance.

A method of testing ice braking ability, a method of testing ice traction ability and a method of testing wear resistance are the same as the methods described in the first through fourth embodiments.

Next, a test tire will be explained.

Each of the test tires has a block pattern shown in Fig. 1. Four blocks are disposed on the tread in the transverse direction of the tire with a pitch of 50 mm in the circumferential direction of the tire. The size of the block in the circumferential direction of the tire is 25 mm, and that of the block in the transverse direction of the tire is 20 mm.

The rubbers were used in which the hardness of the rubber serving as the rubber layer having low wear resistance is 38 degrees, and that of the rubber serving as the rubber layer having high wear resistance is 50 degrees.

The tires of Examples 35 through 50 are the tires in which the rubber layer having low wear resistance and/or the rubber layer having high wear resistance include(s) particles.

The tires of Examples 44 and 46 are the tires in which foamed rubber is used for the rubber layer having high wear resistance.

The cavity ratio Vs is represented by;

$$Vs = (\rho_0 / \rho_1 - 1) \times 100 \ (\%)$$

wherein,

$\rho_1$ is the density (g /cm$^3$) of the rubber having minute cavities;

**EP 0 780 245 B1**

$\rho_0$ is the density (g /cm$^3$) of a solid-phase portion of the rubber having minute cavities.

When the foaming ratio Vs of the foamed rubber is increased, the wear resistance thereof is decreased.

In order to absorb the water membrane efficiently, the average diameter of the minute cavity is preferably 5 to 150 μm, and more preferably 10 to 100 μm.

When the cavity ratio of the rubber layer having the highest wear resistance is less than 2 %, the effect of absorbing the water which has not be drained into the grooves cannot be obtained. On the other hand, when the cavity ratio of the rubber layer having the highest wear resistance is more than 20 %, the wear resistance is reduced so that its wear resistance is closer to that of the rubber layer having low wear resistance. As a result, the depth of the groove appeared on the tread cannot be increased and drainability is lowered.

The tires of Examples 47 and 48 are the tires in which short fibers, which have fallen from the rubber due to the friction with the tread or the like, are contained in the rubber layer having high wear resistance. A cylindrical polyethylene terephthalate having an average diameter of 50 μm and an average length of 2000 μm is used for the short fiber. The percentage contents of the short fibers are shown in the following Tables 8 through 10.

The tire of Example 50 is the tire in which the rubber layer having high wear resistance and the rubber layer having low wear resistance are superposed on one other in the block in the shape of annual rings. The number of superposed layers shown in the Tables is the maximum number of layers appeared in the block, and the thickness of the rubber layer is the average value.

The tire of Comparative Example 4 is the tire in which the rubber layer, which has low wear resistance and does not include short fibers, and the rubber layer, which has high wear resistance and does not include short fibers, are alternately superposed on one other in the transverse direction of the tire. The hardness of the rubber layers, sipings, and the size and arrangement of a block are the same as those of the tire of Example 35. The thickness of the rubber layer and the number of superposed layers are shown in the following Tables 8 through 10.

The tire of Conventional Example 5 is the tire in which the entire cap portion of a tread is formed by a rubber layer which has high wear resistance and includes particles. Sipings, the size and arrangement of a block are the same as those of the tire of Example 35.

The number of superposed rubber layers, the thickness of the rubber layer, the configuration of the superposed rubber layers, the cavity ratio, the difference in the cavity ratios, the ratio of the cells which include protective layers to all of the cells, the test result of the ice braking ability, the test result of the ice traction ability, and the test result of the wear resistance are shown in the following Tables 8 through 10.

The tire whose grooves appeared on the tread surface after the vehicle was run in was used in the tests.

## TABLE 8

| | Ex. 35 | Ex. 36 | Ex. 37 | Ex. 38 | Ex. 39 | Ex. 40 |
|---|---|---|---|---|---|---|
| Number of Superposed Rubber Layers Having the Highest Wear Resistance per 20 mm (pieces) /Thickness (mm) | 5/3 | 5/3 | 5/3 | 5/3 | 5/3 | 5/3 |
| Number of Superposed Rubber Layers Having the Lowest Wear Resistance per 20 mm (pieces) / Thickness (mm) | 5/1 | 5/1 | 5/1 | 5/1 | 5/1 | 5/1 |
| Percentage Content of Particles of Rubber Layer Having the Highest Wear Resistance: a (%) | 2 | 15 | 17 | 0 | 0 | 0 |
| Percentage Content of Particles of Rubber Layer Having the Lowest Wear Resistance: b (%) | 0 | 0 | 0 | 15 | 17 | 30 |
| Difference in Percentage Contents: b-a (%) | -2 | -15 | -17 | 15 | 17 | 30 |
| Cavity Ratio of Rubber Layer Having the Highest Wear Resistance (%) | 0 | 0 | 0 | 0 | 0 | 0 |
| Percentage Content of Short Fibers of Rubber Layer Having the Highest Wear Resistance (%) | 0 | 0 | 0 | 0 | 0 | 0 |
| Superposed State of Rubber Layers (Superposed Direction) | trans-verse | trans-verse | trans-verse | trans-verse | trans-verse | trans-verse |
| Ice Braking Ability Test (Index Number) | 105 | 115 | 115 | 103 | 110 | 115 |
| Ice Traction Ability Test (Index Number) | 103 | 109 | 109 | 102 | 106 | 109 |
| Wear Resistance Test (Index Number) | 100 | 97 | 90 | 99 | 97 | 95 |

Ex. = Example

## TABLE 9

|  | Ex. 41 | Ex. 42 | Ex. 43 | Ex. 44 | Ex. 45 | Ex. 46 |
|---|---|---|---|---|---|---|
| Number of Superposed Rubber Layers Having the Highest Wear Resistance per 20 mm (pieces) /Thickness (mm) | 5/3 | 5/3 | 5/3 | 5/3 | 5/3 | 5/3 |
| Number of Superposed Rubber Layers Having the Lowest Wear Resistance per 20 mm (pieces) / Thickness (mm) | 5/1 | 5/1 | 5/1 | 5/1 | 5/1 | 5/1 |
| Percentage Content of Particles of Rubber Layer Having the Highest Wear Resistance: a (%) | 0 | 5 | 5 | 5 | 5 | 5 |
| Percentage Content of Particles of Rubber Layer Having the Lowest Wear Resistance: b (%) | 32 | 12 | 20 | 30 | 20 | 20 |
| Difference in Percentage Contents: b-a (%) | 32 | 7 | 15 | 25 | 15 | 15 |
| Cavity Ratio of Rubber Layer Having the Highest Wear Resistance (%) | 0 | 0 | 0 | 0 | 10 | 20 |
| Percentage Content of Short Fibers of Rubber Layer Having the Highest Wear Resistance (%) | 0 | 0 | 0 | 0 | 0 | 0 |
| Superposed State of Rubber Layers (Superposed Direction) | trans-verse | trans-verse | trans-verse | trans-verse | trans-verse | trans-verse |
| Ice Braking Ability Test (Index Number) | 115 | 115 | 120 | 123 | 126 | 129 |
| Ice Traction Ability Test (Index Number) | 110 | 109 | 112 | 114 | 115 | 116 |
| Wear Resistance Test (Index Number) | 90 | 95 | 93 | 92 | 90 | 88 |

Ex. = Example

## TABLE 10

| | Ex. 47 | Ex. 48 | Ex. 49 | Ex. 50 | Comp. Ex. 4 | Conv. Ex. 5 |
|---|---|---|---|---|---|---|
| Number of Superposed Rubber Layers Having the Highest Wear Resistance per 20 mm (pieces) /Thickness (mm) | 5/3 | 5/3 | 5/3 | 19/ 0.70 | 5/3 | 5/3 |
| Number of Superposed Rubber Layers Having the Lowest Wear Resistance per 20 mm (pieces) / Thickness (mm) | 5/1 | 5/1 | 5/1 | 19/ 0.35 | 5/1 | 0/0 |
| Percentage Content of Particles of Rubber Layer Having the Highest Wear Resistance: a (%) | 5 | 5 | 5 | 5 | 0 | 20 |
| Percentage Content of Particles of Rubber Layer Having the Lowest Wear Resistance: b (%) | 20 | 20 | 20 | 20 | 0 | ----- |
| Difference in Percentage Contents: b-a (%) | 15 | 15 | 15 | 15 | 0 | ----- |
| Cavity Ratio of Rubber Layer Having the Highest Wear Resistance (%) | 0 | 0 | 0 | 0 | 0 | 0 |
| Percentage Content of Short Fibers of Rubber Layer Having the Highest Wear Resistance (%) | 5 | 10 | 0 | 0 | 0 | 0 |
| Superposed State of Rubber Layers (Superposed Direction) | trans- verse | trans- verse | circum ferenti al | annual rings | trans- verse | ----- |
| Ice Braking Ability Test (Index Number) | 124 | 127 | 110 | 115 | 100 | 100 |
| Ice Traction Ability Test (Index Number) | 118 | 121 | 122 | 117 | 100 | 100 |
| Wear Resistance Test (Index Number) | 90 | 88 | 93 | 93 | 100 | 100 |

Ex. = Example

Comp. Ex. = Comparative Example

Conv. Ex. = Conventional Example

Short fiber = material: polyethylene terephthalate, a cylindrical body having an average diameter of 50 μm and an average length of 2000 μm

Particle = material: syndiotactic-1,2-polybutadiene resin, a sphere having an average diameter of 50 μm

As illustrated in the above-described Tables 8 through 10, the ice braking ability and the ice traction ability of the tires of Examples 35 through 50, in which the rubber layer includes particles, were better than those of the tires of Conventional Example 5 and Comparative Example 4.

Above all, the ice braking abilities of the tires of Examples 37 through 48, in which the direction of superposed rubber layers is the transverse direction of the tire, were better than the ice traction abilities thereof.

Moreover, the ice traction ability of the tire of Example 49, in which the direction of superposed rubber layers is the circumferential direction of the tire, was better than the ice braking ability thereof.

Further, both the ice braking ability and the ice traction ability of the tire of Example 50, in which the rubber layers are formed in the shape of annual rings, were substantially on the same level.

The index number of the wear resistance is not particularly important for practical use provided that the index number is 90 or more.

As a concrete example of the short fibers, polyester, polypropylene, polyethylene represented by polyethylene terephthalate and polyethylene naphthalate or the like can be raised. However, other fibers may be used.

Moreover, the diameter of the short fiber is preferably 10 $\mu$m to 1.0 mm, and the length thereof is preferably 2 to 50 mm. The ratio of the length of the short fiber to the diameter thereof is preferably (the length of the short fiber / the diameter of the short fiber) > 10.

When the percentage content of the short fibers is increased, ice braking ability, ice traction ability and wet resistance improve. However, wear resistance lowers.

Consequently, the percentage content of the short fibers is preferably 1 to 15 % by weight. When the percentage content of the short fibers is less than 1 % by weight, ice braking ability, ice traction ability and wet resistance do not improve. When the percentage content of the short fibers exceeds 15 % by weight, wear resistance lowers.

Because there are no grooves 26 on the tread surface of the pneumatic tire 10 of the previous thirteenth through sixteenth embodiments when the tire 10 is new, it is necessary that the vehicle runs in for a very short distance. In order to obtain high ice gripping ability when the tire is new, such as up to the time in which the grooves 26 appear due to the difference in wear of the rubbers, a plurality of shallow and narrow grooves, whose size is substantially the same as that of the groove 26 and which disappears when the groove 26 appears, may be formed on the surface of the tread 12.

Further, in the pneumatic tires 10 of the aforementioned thirteenth and fourteenth embodiments, the rubber layer 20 having low wear resistance and the rubber layer 22 having high wear resistance are linear on the surface of the tread 12. However, the rubber layers 20 and 22 may be wave-shaped or zigzag-shaped.

## Claims

1. A pneumatic tire (10) in which a reinforcing layer and a tread (12) are disposed at an outer circumference of a crown portion of a carcass which extends over a pair of bead cores and is formed in a toroidal shape, comprising:

   rubber layers (20, 22) having different wear resistances are adjacent to each other in a cross section of at least a ground portion (12A) of said tread (12), which cross section is orthogonal to a radial direction of the tire, and two or more rubber layers (20, 22) of said rubber layers are superposed on one other per 10 mm length along the cross section;

   **characterized in that**
   at least one layer of said two or more superposed rubber layers (20, 22) has innumerable minute cavities (23).

2. A pneumatic tire according to claim 1, wherein said ground portions (12A) are blocks (18) defined by a plurality of grooves (14,16).

3. A pneumatic tire (10) according to claim 1 or 2, wherein said rubber layers (20,22) are superposed along a transverse direction of the tire.

4. A pneumatic tire (10) according to claim 1 or 2, wherein said rubber layers (20,22) are superposed along a circumferential direction of the tire.

5. A pneumatic tire (10) according to claim 1 or 2, wherein said rubber layers are superposed in the form of annual rings (26).

6. A pneumatic tire (10) according to claim 1, wherein the rubber layer (22) having the highest wear resistance of said rubber layers has innumerable minute cavities (23), and the cavity ratio is 2 to 20 %.

7.  A pneumatic tire (10) according to claim 1, wherein the rubber layer (20) having the lowest wear resistance of said rubber layers has innumerable minute cavities (23), and the cavity ratio is 21 to 70 %.

8.  A pneumatic tire (10) according to any one of claims 1, 6 or 7, wherein the rubber layer (22) having the highest wear resistance of said rubber layers and the rubber layer (20) having the lowest wear resistance of said rubber layers have innumerable minute cavities (23).

9.  A pneumatic tire (10) according to claim 8, wherein a difference in the cavity ratios between the rubber layer (22) having the highest wear resistance of the rubber layers and the rubber layer (20) having the lowest wear resistance of the rubber layers is 20 % or more.

10. A pneumatic tire (10) according to any one of claims 1 or 6 to 9, wherein at least some of the minute cavities (23), which are included in the rubber layer (22) having the highest wear resistance, have a protective layer between the minute cavity and the rubber.

11. A pneumatic tire (10) according to any one of claims 1 or 6 to 10, wherein at least the rubber layer having the highest wear resistance (22) has innumerable short fibers (50).

12. A pneumatic tire (10) according to one of claims 1 or 6 to 11, wherein at least the rubber layer (22) having the highest wear resistance has innumerable particles (60).

13. A pneumatic tire (10) in which a reinforcing layer and a tread (12) are disposed at an outer circumference of a crown portion of a carcass which extends over a pair of bead cores and is formed in a toroidal shape, comprising:

    rubber layers (20, 22) having different wear resistances are adjacent to each other in a cross section of at least a ground portion (12A) of said tread (12), which cross section is orthogonal to a radial direction of the tire, and two or more rubber layers (20, 22) of said rubber layers are superposed on one other per 10 mm length along the cross section;

    **characterized in that**
    at least one layer of said two or more superposed rubber layers (20, 22) has innumerable short fibers (50).

14. A pneumatic tire (10) according to claim 13, wherein the rubber layer (22) having the highest wear resistance of said rubber layers has innumerable short fibers (50), and the percentage content is 1 to 15 % by weight.

15. A pneumatic tire (10) according to claim 13, wherein the rubber layer (20) having the lowest wear resistance of said rubber layers has innumerable short fibers (50), and the percentage content is 16 to 30 % by weight.

16. A pneumatic tire (10) according to one of claims 13 through 15, wherein the rubber layer (22) having the highest wear resistance of said rubber layers and the rubber layer (20) having the lowest wear resistance of said rubber layers have innumerable short fibers (50), and the difference in the percentage content between the rubber layer (22) having the highest wear resistance and the rubber layer (20) having the lowest wear resistance is 10 % or more by weight.

17. A pneumatic tire (10) according to one of claims 13 through 16, wherein at least the rubber layer (22) having the highest wear resistance has innumerable particles (60).

18. A pneumatic tire (10) in which a reinforcing layer and a tread (12) are disposed at an outer circumference of a crown portion of a carcass which extends over a pair of bead cores and is formed in a toroidal shape, comprising:

    rubber layers (20, 22) having different wear resistances are adjacent to each other in a cross section of at least a ground portion (12A) of said tread (12), which cross section is orthogonal to a radial direction of the tire, and two or more rubber layers (20, 22) of said rubber layers are superposed on one other per 10 mm length along the cross section;

    **characterized in that**
    at least one layer of said two or more superposed rubber layers (20, 22) has innumerable particles (60).

19. A pneumatic tire (10) according to claim 18, wherein the rubber layer (22)having the highest wear resistance of said rubber layers has innumerable particles (60), and the percentage content is 1 to 15 % by weight.

20. A pneumatic tire (10) according to claim 18, wherein the rubber layer (20) having the lowest wear resistance of said rubber layers has innumerable particles (60), and the percentage content is 16 to 30 % by weight.

21. A pneumatic tire (10) according to one of claims 18 through 20, wherein the rubber layer having (22) the highest wear resistance of said rubber layers and the rubber layer (20) having the lowest wear resistance of said rubber layers have innumerable particles (60), and the difference in the percentage content between the rubber layer having the highest wear resistance and the rubber layer having the lowest wear resistance is 10 % or more by weight.

22. A pneumatic tire (10) according to claim 1, wherein at least one layer of said two or more superposed rubber layers (20,22) has innumerable particles (60).

23. A pneumatic tire (10) according to claim 22, wherein the rubber layer (22) having the highest wear resistance of said rubber layers has innumerable particles (60), and the percentage content is 1 to 15 % by weight.

24. A pneumatic tire (10) according to claim 22, wherein the rubber layer (20) having the lowest wear resistance of said rubber layers has innumerable particles (60), and the percentage content is 16 to 30 % by weight.

25. A pneumatic tire (10) according to one of claims 22 through 24, wherein the rubber layer (22) having the highest wear resistance of said rubber layers and the rubber layer (20) having the lowest wear resistance of said rubber layers have innumerable particles (60), and the difference in the percentage content between the rubber layer having the highest wear resistance and the rubber layer having the lowest wear resistance is 10 % or more by weight.

**Patentansprüche**

1. Luftreifen (10); bei dem eine verstärkende Schicht und eine Lauffläche (12) an einem äußeren Umfang eines Kronenbereichs einer Karkasse angebracht sind, die sich über ein Paar von Wulstkernen erstreckt und toroidförmig gestaltet ist, umfassend:

   Gummischichten (20, 22), die unterschiedliche Abnutzungswiderstände haben, die einander in einem Querschnitt von mindestens einem den Boden berührenden Bereich (12A) der Lauffläche (12) benachbart sind, wobei der Querschnitt senkrecht zu einer radialen Richtung des Reifens ist, und wobei zwei oder mehrere Gummischichten (20, 22) der Gummischichten übereinander pro 10 mm Länge entlang des Querschnitts überlagert sind;

   **dadurch gekennzeichnet, dass**
   zumindest eine Schicht der zwei oder mehr überlagerten Gummischichten (20, 22) unzählige Minivertiefungen (23) hat.

2. Luftreifen nach Anspruch 1, wobei die den Boden berührenden Bereiche (12A) Blöcke (18) sind, die durch eine Vielzahl von Nuten (14, 16) definiert werden.

3. Luftreifen (10) nach Anspruch 1 oder 2, wobei die Gummischichten (20, 22) entlang einer Querrichtung des Reifens überlagert sind.

4. Luftreifen (10) nach Anspruch 1 oder 2, wobei die Gummischichten (20, 22) entlang einer Umfangsrichtung des Reifens überlagert sind.

5. Luftreifen (10) nach Anspruch 1 oder 2, wobei die Gummischichten in der Gestalt von ringförmigen Ringen (26) überlagert sind.

6. Luftreifen (10) nach Anspruch 1, wobei die Gummischicht (22) mit dem höchsten Abnutzungswiderstand der Gummischichten unzählige Minivertiefungen (23) hat und das Vertiefungsverhältnis 2 bis 20% ist.

7. Luftreifen (10) nach Anspruch 1, wobei die Gummischicht (20) mit dem niedrigsten Abnutzungswiderstand der Gummischichten unzählige Minivertiefungen (23) hat und das Vertiefungsverhältnis 21 bis 70% ist.

8. Luftreifen (10) nach einem der Ansprüche 1, 6 oder 7, wobei die Gummischicht (22) mit dem höchsten Abnutzungswiderstand der Gummischichten und die Gummischicht (20) mit dem niedrigsten Abnutzungswiderstand der Gummischichten unzählige Minivertiefungen (23) haben.

9. Luftreifen (10) nach Anspruch 8, wobei eine Differenz in der Vertiefungsverhältnissen zwischen der Gummischicht (22) mit dem höchsten Abnutzungswiderstand der Gummischichten und der Gummischicht (20) mit dem niedrigsten Abnutzungswiderstand der Gummischichten 20% oder mehr ist.

10. Luftreifen (10) nach einem der Ansprüche 1 oder 6 bis 9, wobei mindestens einige der Minivertiefungen (23), die in der Gummischicht (22) mit dem höchsten Abnutzungswiderstand enthalten sind, eine Schutzschicht zwischen der Minivertiefung und dem Gummi haben.

11. Luftreifen (10) nach einem der Ansprüche 1 oder 6 bis 10, wobei mindestens die Gummischicht mit dem höchsten Abnutzungswiderstand (22) unzählige kurzen Fasern (50) hat.

12. Luftreifen (10) nach einem der Ansprüche 1 oder 6 bis 11, wobei mindestens die Gummischicht (22) mit dem höchsten Abnutzungswiderstand unzählige Partikel (60) hat.

13. Luftreifen (10), bei dem eine verstärkende Schicht und eine Lauffläche (12) an einem äußeren Umfang eines Kronenbereichs einer Karkasse angebracht sind, die sich über ein Paar von Wulstkernen erstreckt und toroidförmig gestaltet ist, umfassend:

   Gummischichten (20, 22), die unterschiedliche Abnutzungswiderstände haben, die einander in einem Querschnitt von mindestens einem Grundbereich (12A) der . Lauffläche (12) benachbart sind, dessen Querschnitt senkrecht zu einer radialen Richtung des Reifens ist, und wobei zwei oder mehr Gummischichten (20, 22) der Gummischichten übereinander pro 10 mm Länge entlang des Querschnitts überlagert sind;

   **dadurch gekennzeichnet, dass**
   mindestens eine Schicht der zwei oder mehr überlagerten Gummischichten (20, 22) unzählige kurzen Fasern (50) hat.

14. Luftreifen (10) nach Anspruch 13, wobei die Gummischicht (22) mit dem höchsten Abnutzungswiderstand der Gummischichten unzählige kurzen Fasern (50) hat und der prozentuale Anteil 1 bis 15 Gew-% ist.

15. Luftreifen (10) nach Anspruch 13, wobei die Gummischicht (20) mit dem niedrigsten Abnutzungswiderstand der Gummischichten unzählige kurze Fasern (50) hat und der prozentuale Anteil 16 bis 30 Gew-% ist.

16. Luftreifen (10) nach einem der Ansprüche 13 bis 15, wobei die Gummischicht (22) mit dem höchsten Abnutzungswiderstand der Gummischichten und die Gummischicht (20) mit dem niedrigsten Abnutzungswiderstand der Gummischichten unzählige kurzen Fasern (50) haben und die Differenz im prozentualen Anteil zwischen der Gummischicht (22) mit dem höchsten Abnutzungswiderstand und der Gummischicht (20) mit dem niedrigsten Abnutzungswiderstand 10 oder mehr Gew-% ist.

17. Luftreifen (10) nach einem der Ansprüche 13 bis 16, wobei mindestens die Gummischicht (22) mit dem höchsten Abnutzungswiderstand unzählige Partikel (60) hat.

18. Luftreifen (10), bei dem eine verstärkende Schicht und eine Lauffläche (12) an einem äußeren Umfang eines Kronenbereichs einer Karkasse angebracht sind, die sich über ein Paar von Wulstkernen erstreckt und toroidförmig gestaltet ist, umfassend:

   Gummischichten (20, 22) mit unterschiedlichen Abnutzungswiderständen, die benachbart zueinander in einem Querschnitt von mindestens einem den Boden berührenden Bereich (12A) der Lauffläche (12) sind, wobei der Querschnitt senkrecht zu einer radialen Richtung des Reifens ist, und wobei zwei oder mehr Gummischichten (20, 22) der Gummischichten übereinander pro 10 mm Länge entlang des Querschnitts überlagert sind;

**dadurch gekennzeichnet, dass**

mindestens eine Schicht der zwei oder mehr überlagerten Gummischichten (20, 22) unzählige Partikel (60) hat.

19. Luftreifen (10) nach Anspruch 18, wobei die Gummischicht (22) mit dem höchsten Abnutzungswiderstand der Gummischichten unzählige Partikel (60) hat und der prozentuale Anteil 1 bis 15 Gew-% ist.

20. Luftreifen (10) nach Anspruch 18, wobei die Gummischicht (20) mit dem niedrigsten Abnutzungswiderstand der Gummischichten unzählige Partikel (60) hat und der prozentuale Anteil 16 bis 30 Gew-% ist.

21. Luftreifen (10) nach einem der Ansprüche 18 bis 20, wobei die Gummischicht (22) mit dem höchsten Abnutzungswiderstand der Gummischichten und die Gummischicht (20) mit dem niedrigsten Abnutzungswiderstand der Gummischichten unzählige Partikel (60) haben und die Differenz im prozentualen Anteil zwischen der Gummischicht mit dem höchsten Abnutzungswiderstand und der Gummischicht mit dem niedrigsten Abnutzungswiderstand 10 oder mehr Gew-% ist.

22. Luftreifen (10) nach Anspruch 1, wobei mindestens eine der zwei oder mehr überlagerten Gummischichten (20, 22) unzählige Partikel (60) hat.

23. Luftreifen (10) nach Anspruch 22, wobei die Gummischicht (22) mit dem höchsten Abnutzungswiderstand der Gummischichten unzählige Partikel (60) hat und der prozentuale Anteil 1 bis 15 Gew-% ist.

24. Luftreifen (10) nach Anspruch 22, wobei die Gummischicht (20) mit dem niedrigsten Abnutzungswiderstand der Gummischichten unzählige Partikel (60) hat und der prozentuale Anteil 16 bis 30 Gew-% ist.

25. Luftreifen (10) nach einem der Ansprüche 22 bis 24, wobei die Gummischicht (22) mit dem höchsten Abnutzungswiderstand der Gummischichten und die Gummischicht (20) mit dem niedrigsten Abnutzungswiderstand der Gummischichten unzählige Partikel (60) haben und der Unterschied im prozentualen Anteil zwischen der Gummischicht mit dem höchsten Abnutzungswiderstand und der Gummischicht mit dem niedrigsten Abnutzungswiderstand 10 oder mehr Gew-% ist.

## Revendications

1. Pneumatique (10) dans lequel une couche de renforcement et une bande de roulement (12) sont disposées sur une circonférence extérieure d'une partie du sommet d'une carcasse qui s'étend sur une paire de tringles et qui est conçu selon une forme toroïdale, comprenant:

   les couches de caoutchouc (20, 22) ayant différentes résistances à l'usure sont adjacentes les unes des autres dans une section transversale d'au moins une partie au sol (12A) de ladite bande de roulement (12), laquelle section transversale est orthogonale au sens radial du pneu, et deux ou plusieurs couches de caoutchouc (20, 22) desdites couches de caoutchouc sont superposées sur une autre couche par longueur de 10 millimètres le long de la section transversale;

   **caractérisé en ce que**
   au moins une couche desdites deux ou plusieurs couches de caoutchouc superposées (20, 22) est munie d'innombrables cavités minuscules (23).

2. Pneumatique selon la revendication 1, dans lequel lesdites parties au sol (12A) sont des blocs (18) définis par une pluralité de rainures (14, 16).

3. Pneumatique (10) selon la revendication 1 ou 2, dans lequel lesdites couches de caoutchouc (20, 22) sont superposées le long d'une direction transversale du pneu.

4. Pneumatique (10) selon la revendication 1 ou 2, dans lequel lesdites couches de caoutchouc (20, 22) sont superposées le long d'une direction circonférentielle du pneu.

5. Pneumatique (10) selon la revendication 1 ou 2, dans lequel lesdites couches de caoutchouc sont superposées sous forme de couches annuelles (26).

**EP 0 780 245 B1**

**6.** Pneumatique (10) selon la revendication 1, dans lequel la couche de caoutchouc (22) ayant la résistance à l'usure la plus élevée desdites couches de caoutchouc est munie d'innombrables cavités minuscules (23), et le rapport de cavité est de 2 à 20%.

**7.** Pneumatique (10) selon la revendication 1, dans lequel la couche de caoutchouc (20) ayant la résistance à l'usure la plus faible desdites couches de caoutchouc est munie d'innombrables cavités minuscules (23), et le rapport de cavité est de 21 à 70%.

**8.** Pneumatique (10) selon l'une quelconque des revendications 1, 6 ou 7, dans lequel la couche de caoutchouc (22) ayant la résistance à l'usure la plus élevée desdites couches de caoutchouc et la couche de caoutchouc (20) ayant la résistance à l'usure la plus faible desdites couches de caoutchouc sont munies d'innombrables, cavités minuscules (23).

**9.** Pneumatique (10) selon la revendication 8, dans lequel une différence dans les rapports de cavité entre la couche de caoutchouc (22) ayant la résistance à l'usure la plus élevée des couches de caoutchouc et la couche de caoutchouc (20) ayant la résistance à l'usure la plus faible des couches de caoutchouc est de 20% ou plus.

**10.** Pneumatique (10) selon l'une quelconque des revendications 1, ou 6 à 9, dans lequel au moins certaines des minuscules cavités (23), qui sont comprises dans la couche de caoutchouc (22) ayant la résistance à l'usure la plus élevée, sont munies d'une couche protectrice entre la cavité minuscule et le caoutchouc.

**11.** Pneumatique (10) selon l'une quelconque des revendications 1 ou 6 à 10, dans lequel au moins la couche de caoutchouc ayant la résistance à l'usure la plus élevée (22) est munie d'innombrables fibres courtes (50).

**12.** Pneumatique (10) selon l'une quelconque des revendications 1 ou 6 à 11, dans lequel au moins la couche de caoutchouc (22) ayant la résistance à l'usure la plus élevée est munie d'innombrables particules (60).

**13.** Pneumatique (10) dans lequel une couche de renforcement et une bande de roulement (12) sont disposées sur une circonférence extérieure d'une partie du sommet d'une carcasse qui s'étend sur une paire de tringles et est conçu sous une forme toroïdale, comprenant:

des couches de caoutchouc (20, 22) ayant différentes résistances à l'usure qui sont adjacentes les unes des autres dans une section transversale d'au moins une partie au sol (12A) de ladite bande de roulement (12), laquelle section transversale est orthogonale à un sens radial du pneu, et deux ou plusieurs couches de caoutchouc (20, 22) desdites couches de caoutchouc sont superposés sur une autre couche par longueur de 10 millimètres le long de la section transversale;

**caractérisé en ce que**
au moins une couche desdites deux ou plusieurs couches de caoutchouc superposés (20, 22) est munie d'innombrables fibres courtes (50).

**14.** Pneumatique (10) selon la revendication 13, dans lequel la couche de caoutchouc (22) ayant la résistance à l'usure la plus élevée desdites couches de caoutchouc est munie d'innombrables fibres courtes (50), et dont le contenu en pourcentage est de 1 à 15% en poids.

**15.** Pneumatique (10) selon la revendication 13, dans lequel la couche de caoutchouc (20) ayant la résistance à l'usure la plus faible desdites couches de caoutchouc est munie d'innombrables fibres courtes (50), et dont le contenu en pourcentage est de 16 à 30% en poids.

**16.** Pneumatique (10) selon une des revendications 13 à 15, dans lequel la couche de caoutchouc (22) ayant la résistance à l'usure la plus élevée desdites couches de caoutchouc et la couche de caoutchouc (20) ayant la résistance à l'usure la plus faible desdites couches de caoutchouc sont munies d'innombrables fibres courtes (50), et la différence concernant le contenu en pourcentage entre la couche de caoutchouc (22) ayant la résistance à l'usure la plus élevée et la couche de caoutchouc (20) ayant la résistance à l'usure la plus faible est de 10% en poids ou plus.

**17.** Pneumatique (10) selon l'une quelconque des revendications 13 à 16, dans lequel au moins la couche de caoutchouc (22) ayant la résistance à l'usure la plus élevée est munie d'innombrables particules (60).

**18.** Pneumatique (10) dans lequel une couche de renforcement et une bande de roulement (12) sont disposées sur une circonférence extérieure d'une partie de sommet d'une carcasse qui s'étend sur une paire de tringles et est conçu sous une forme toroïdale, comprenant:

des couches de caoutchouc (20, 22) ayant différentes résistances à l'usure qui sont adjacentes les unes des autres dans une section transversale d'au moins une partie au sol (12A) de ladite bande de roulement (12), dont la section transversale est orthogonale à un sens radial du pneu, et deux ou plusieurs couches de caoutchouc (20, 22) desdites couches de caoutchouc sont superposés sur une autre couche par longueur de 10 millimètres le long de la section transversale;

**caractérisé en ce que**
au moins une couche desdites deux ou plusieurs couches de caoutchouc superposées (20, 22) est munie d'innombrables particules (60).

**19.** Pneumatique (10) selon la revendication 18, dans lequel la couche de caoutchouc (22) ayant la résistance à l'usure la plus élevée desdites couches de caoutchouc est munie d'innombrables particules (60), et le contenu en pourcentage est de 1 à 15% en poids.

**20.** Pneumatique (10) selon la revendication 18, dans lequel la couche de caoutchouc (20) ayant la résistance à l'usure la plus faible desdites couches de caoutchouc est munie d'innombrables particules (60), et le contenu en pourcentage est de 16 à 30% en poids.

**21.** Pneumatique (10) selon l'une quelconque des revendications 18 à 20, dans lequel la couche de caoutchouc (22) ayant la résistance à l'usure la plus élevée desdites couches de caoutchouc et la couche de caoutchouc (20) ayant la résistance à l'usure la plus faible desdites couches de caoutchouc sont munies d'innombrables particules (60), et la différence concernant le contenu en pourcentage entre la couche de caoutchouc ayant la résistance à l'usure la plus élevée et la couche de caoutchouc ayant la résistance à l'usure la plus faible est de 10% en poids ou plus.

**22.** Pneumatique (10) selon la revendication 1, dans lequel au moins une couche desdites deux ou plusieurs couches de caoutchouc superposées (20, 22) est munie d'innombrables particules (60).

**23.** Pneumatique (10) selon la revendication 22, dans lequel la couche de caoutchouc (22) ayant la résistance à l'usure la plus élevée desdites couches de caoutchouc est munie d'innombrables particules (60), et le contenu en pourcentage est de 1 à 15% en poids.

**24.** Pneumatique (10) selon la revendication 22, dans lequel la couche de caoutchouc (20) ayant la résistance à l'usure la plus faible desdites couches de caoutchouc est munie d'innombrables particules (60), et le contenu en pourcentage est de 16 à 30% en poids.

**25.** Pneumatique (10) selon l'une quelconque des revendications 22 à 24, dans lequel la couche de caoutchouc (22) ayant la résistance à l'usure la plus élevée desdites couches de caoutchouc et la couche de caoutchouc (20) ayant la résistance à l'usure la plus faible desdités couches de caoutchouc sont munies d'innombrables particules (60), et la différence concernant le contenu en pourcentage entre la couche de caoutchouc ayant la résistance à l'usure la plus élevée et la couche de caoutchouc ayant la résistance à l'usure la plus faible est de 10% en poids ou plus.

F I G. 1

EP 0 780 245 B1

FIG. 2

38

F I G. 3

FIG. 4

F I G. 5

EP 0 780 245 B1

EP 0 780 245 B1

F I G. 6

B

A

18

C

22 20 22

18

R

42

F I G. 7

34

22
20
22
20

FIG. 8

F I G. 9

F I G. 10 A

F I G. 10 B

F I G.  1 1 A

F I G.  1 1 B